(19)

Europäisches
Patentamt
European
Patent Office
Office européen
des brevets

(11) **EP 4 421 626 A1**

(12) **EUROPEAN PATENT APPLICATION**
published in accordance with Art. 153(4) EPC

(43) Date of publication:
**28.08.2024 Bulletin 2024/35**

(21) Application number: **22903373.3**

(22) Date of filing: **05.12.2022**

(51) International Patent Classification (IPC):
*G06F 9/451* (2018.01)

(52) Cooperative Patent Classification (CPC):
**G06F 1/16; G06F 3/14; G06F 9/451**

(86) International application number:
**PCT/CN2022/136542**

(87) International publication number:
**WO 2023/103951 (15.06.2023 Gazette 2023/24)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **10.12.2021 CN 202111510479**

(71) Applicant: **Huawei Technologies Co., Ltd.
Shenzhen, Guangdong 518129 (CN)**

(72) Inventors:
- **WU, Zhongbiao
  Shenzhen, Guangdong 518129 (CN)**
- **JIANG, Hua
  Shenzhen, Guangdong 518129 (CN)**

(74) Representative: **Isarpatent
Patent- und Rechtsanwälte
Barth Hassa Peckmann & Partner mbB
Friedrichstraße 31
80801 München (DE)**

(54) **DISPLAY METHOD FOR FOLDABLE SCREEN AND RELATED APPARATUS**

(57) A display method for a foldable screen is applied to an electronic device (100). The electronic device (100) includes a first screen and a second screen. The first screen and the second screen are respectively located on two sides of the electronic device (100), one of the first screen and the second screen is a foldable screen, and the foldable screen is foldable along a folding edge. The method includes: The electronic device (100) determines an included angle between the folding edge and a horizontal plane when an interface of a target application is displayed on the first screen and if it is detected that the foldable screen changes from a first physical state to a second physical state; and the electronic device (100) keeps displaying an interface of the target application on the first screen when the included angle between the folding edge and the horizontal plane is greater than a preset threshold; or the electronic device (100) displays an interface of the target application on the second screen when the included angle between the folding edge and the horizontal plane is not greater than a preset threshold. According to the method, in some special scenarios, a user can keep a specified display displaying an interface of an application, to improve user experience.

FIG. 9A

EP 4 421 626 A1

**Description**

This application claims priority to Chinese Patent Application No. 202111510479.X, filed with the China National Intellectual Property Administration on December 10, 2021 and entitled "DISPLAY METHOD FOR FOLDABLE SCREEN AND RELATED APPARATUS", which is incorporated herein by reference in its entirety.

**TECHNICAL FIELD**

This application relates to the field of electronic technologies, and in particular, to a display method for a foldable screen and a related apparatus.

**BACKGROUND**

As electronic devices continuously develop, more electronic devices with displays such as mobile phones with displays are used in people's daily life and work. In addition, as screen technologies develop, an electronic device (for example, a foldable phone) that is configured with a foldable screen and proposed in recent years is a development direction of electronic devices in the future.

Currently, the electronic device configured with a foldable screen may be further configured with a secondary screen on an opposite side of the foldable screen, and a form of the foldable screen may be classified into a folded form, a semi-folded form, and an unfolded form. When the foldable screen is in the folded form, the electronic device usually displays an interface of an application on the secondary screen. When the foldable screen is in the semi-folded form or the unfolded form, the electronic device usually displays the interface of the application on a primary screen. Because the electronic device determines, based on the form of the foldable screen, that the foldable screen or the secondary screen displays the interface of the application, in some special scenarios, a user cannot specify a display to display the interface of the application.

**SUMMARY**

Embodiments of this application provide a display method for a foldable screen and a related apparatus, so that a user can keep a specified display displaying an interface of an application in some special scenarios. This improves user experience.

According to a first aspect, an embodiment of this application provides a display method for a foldable screen, applied to an electronic device. The electronic device includes a first screen and a second screen. The first screen and the second screen are respectively located on two sides of the electronic device, one of the first screen and the second screen is a foldable screen, and the foldable screen is foldable along a folding edge. The method includes:

The electronic device determines an included angle between the folding edge and a horizontal plane when an interface of a target application is displayed on the first screen and if it is detected that the foldable screen changes from a first physical state to a second physical state; and

the electronic device keeps displaying an interface of the target application on the first screen when the included angle between the folding edge and the horizontal plane is greater than a preset threshold; or the electronic device displays an interface of the target application on the second screen when the included angle between the folding edge and the horizontal plane is not greater than a preset threshold.

During implementation of this embodiment of this application, the electronic device detects the included angle between the folding edge and the horizontal plane when a physical status changes, and the electronic device keeps displaying an interface of the target application on the first screen when the included angle between the folding edge and the horizontal plane is greater than the preset threshold (that is, the folding edge is nearly perpendicular to the horizontal plane). In this case, in a special scenario, a user may hold the electronic device to keep the folding edge of the electronic device nearly perpendicular to the horizontal plane, to keep the first screen displaying an interface of the target application. The method can meet a user requirement of the user in the special scenario.

With reference to the first aspect, in a possible implementation, that the electronic device determines the included angle between the folding edge and the horizontal plane includes: The electronic device obtains a gravity acceleration of a display in a direction of the folding edge; and when the gravity acceleration is greater than a preset value, the electronic device determines that the included angle between the folding edge and the horizontal plane is greater than the preset threshold.

During implementation of this embodiment of this application, the electronic device may determine, based on the gravity acceleration of the display in the direction of the folding edge, whether the included angle between the folding edge and the horizontal plane is nearly perpendicular.

In a possible implementation, the display may be two screens formed by the foldable screen along the folding edge. The electronic device may separately obtain gravity accelerations of the two screens in the direction of the folding edge; and then determine, based on the gravity accelerations of the two screens in the direction of the folding edge, whether the included angle between the folding edge and the horizontal plane is nearly perpendicular. In the method, whether the included angle between the folding edge and the horizontal plane is nearly perpendicular can be more accurately determined based on the gravity accelerations of two screens formed by the foldable screen in the direction of the folding edge.

With reference to the first aspect, in a possible implementation, the method further includes: The electronic device determines the included angle between the folding edge and the horizontal plane when keeping displaying an interface of the target application on the first screen; and the electronic device displays an interface of the target application on the second screen when the included angle between the folding edge and the horizontal plane is not greater than the preset threshold.

During implementation of this embodiment of this application, after determining that the folding edge is nearly horizontal to the horizontal plane, the electronic device may determine, in real time or periodically, the included angle between the folding edge and the horizontal plane while keeping displaying an interface of the target application on the first screen; and the electronic device displays an interface of the target application on the second screen when the included angle between the folding edge and the horizontal plane is not greater than the preset threshold. In this case, the user may hold the electronic device to make the electronic device not nearly perpendicular to the horizontal plane, to end a state of keeping an interface of the target application displaying on the first screen.

With reference to the first aspect, in a possible implementation, the method further includes: The electronic device detects a folding angle by using a Hall effect sensor when keeping displaying an interface of the target application on the first screen; and the electronic device displays an interface of the target application on the second screen when determining that the folding angle is 0° or 180°.

During implementation of this embodiment of this application, when keeping displaying an interface of the target application on the first screen, the electronic device may detect a fully folded form and a fully unfolded form by using the Hall effect sensor, to end, in the fully folded form and the fully unfolded form end, a state of keeping displaying an interface of the target application on the first screen. In the fully folded form, a folding angle is 0°; and in the fully unfolded form, a folding angle is 180°. In the method, the user may exit a current display status by fully unfolding or fully folding the electronic device. It should be noted that the Hall effect sensor can directly sense the fully folded form and the fully unfolded form while another sensor needs to obtain data and then calculate a folding angle. Therefore, the method is more efficient and convenient for detecting the fully folded form and the fully unfolded form by using the Hall effect sensor.

In another possible implementation, the method further includes: The electronic device detects a folding angle by using a Hall effect sensor when keeping displaying an interface of the target application on the first screen; and the electronic device does not display an interface of the target application on the second screen when determining that the folding angle is 0° or 180°.

According to the method, the user may exit a display status by fully unfolding or fully folding the electronic device, and turn off the display of the electronic device. The electronic device may further exit the target application.

With reference to the first aspect, in a possible implementation, the first screen is a foldable screen, and the second screen is a secondary screen;

that the electronic device determines the included angle between the folding edge and the horizontal plane when an interface of the target application is displayed on the first screen and if it is detected that the foldable screen changes from the first physical state to the second physical state includes: The electronic device displays a first interface of the target application on the foldable screen in response to a user operation for the target application, where the first interface includes a picture shot in the first physical state;

that the electronic device keeps displaying an interface of the target application on the first screen when the included angle between the folding edge and the horizontal plane is greater than the preset threshold includes: The electronic device displays a second interface on the foldable screen, where the second interface includes a picture shot in a second physical state; and

that the electronic device displays an interface of the target application on the secondary screen when the included angle between the folding edge and the horizontal plane is not greater than the preset threshold includes: The electronic device displays the second interface on the secondary screen.

With reference to the first aspect, in a possible implementation, a physical status of the foldable screen includes an unfolded form, a semi-folded form, and a folded form.

During implementation of the embodiments of this application, the electronic device may be used in a shooting scene. In this scene, a display status of the electronic device does not depend on a folding status of the foldable screen, and is related to an included angle relationship between the folding edge and the horizontal plane. For example, when holding the electronic device, the user may make the folding edge of the electronic device nearly perpendicular to the ground. In this case, the user may randomly switch the foldable screen among the folded form, the semi-folded form, and the unfolded form during video recording, and a case in which the video recording is affected because the foldable screen is turned off and the application exits does not occur. It may be understood that the user may perform photographing at a large field of view by using the electronic device. The method can meet a photographing requirement of the user, and improve user experience.

With reference to the first aspect, in a possible implementation, the method further includes:

The electronic device displays an interface of the target application on the second screen when displaying the interface of the target application on the first screen.

That the electronic device keeps displaying an interface of the target application on the first screen includes: The electronic device keeps displaying the interface of the target application on the first screen and the second screen.

During implementation of this embodiment of this application, the electronic device may display an interface of the application on both the first screen and the second screen. The method can meet a requirement that the user needs to simultaneously display the two screens.

According to a second aspect, an embodiment of this application provides an electronic device, including: a first screen, a second screen, an acceleration sensor, one or more cameras, one or more processors, and one or more memories. The first screen and the second screen are respectively located on two sides of the electronic device, one of the first screen and the second screen is a foldable screen, and the foldable screen is foldable along a folding edge. The foldable screen, the acceleration sensor, the one or more cameras, and the one or more memories are coupled to the one or more processors.

The acceleration sensor is configured to detect data so that the one or more processors determine an included angle relationship between the folding edge and a horizontal plane.

The one or more memories are configured to store computer program code, where the computer program code includes computer instructions, and when the computer instructions run on the processors, the electronic device is enabled to perform the following steps:

the electronic device determines an included angle between the folding edge and a horizontal plane when an interface of a target application is displayed on the first screen and if it is detected that the foldable screen changes from a first physical state to a second physical state; and
the electronic device keeps displaying an interface of the target application on the first screen when the included angle between the folding edge and the horizontal plane is greater than a preset threshold; or
the electronic device displays an interface of the target application on the second screen when the included angle between the folding edge and the horizontal plane is not greater than a preset threshold.

With reference to the second aspect, in a possible implementation, when the computer instructions run on the processors, the electronic device is enabled to further perform the following steps:

The electronic device obtains a gravity acceleration of a display in a direction of the folding edge; and

when the gravity acceleration is greater than a preset value, the electronic device determines that the included angle between the folding edge and the horizontal plane is greater than the preset threshold.

With reference to the second aspect, in a possible implementation, when the computer instructions run on the processors, the electronic device is enabled to further perform the following steps:

The electronic device determines the included angle between the folding edge and the horizontal plane when keeping displaying an interface of the target application on the first screen; and

the electronic device displays an interface of the target application on the second screen when the included angle between the folding edge and the horizontal plane is not greater than the preset threshold.

With reference to the second aspect, in a possible implementation, the foldable screen is foldable along the folding edge to form a folding angle, and when the computer instructions run on the processors, the electronic device is enabled to further perform the following steps:

The electronic device detects the folding angle by using a Hall effect sensor when keeping displaying an interface of the target application on the first screen; and

the electronic device displays an interface of the target application on the second screen when determining that the folding angle is 0° and/or 180°.

With reference to the second aspect, in a possible implementation, the first screen is a foldable screen, and the second screen is a secondary screen; and when the computer instructions run on the processors, the electronic device is enabled to further perform the following steps:

that the electronic device determines the included angle between the folding edge and the horizontal plane when an interface of the target application is displayed on the first screen and if it is detected that the foldable screen changes from the first physical state to the second physical state includes: The electronic device displays a first interface of the target application on the foldable screen in response to a user operation for the target application, where the first interface includes a picture shot in the first physical state;

that the electronic device keeps displaying an interface of the target application on the first screen when the included angle between the folding edge and the horizontal plane is greater than the preset threshold includes: The electronic device displays a second interface on the foldable screen, where the second interface includes a picture shot in a second physical state; and

that the electronic device displays an interface of the target application on the secondary screen when the included angle between the folding edge and the horizontal plane is not greater than the preset threshold includes: The electronic device displays the second interface on the secondary screen.

With reference to the second aspect, in a possible implementation, a physical status of the foldable screen includes an unfolded form, a semi-folded form, and a folded form.

With reference to the second aspect, in a possible implementation, when the computer instructions run on the processors, the electronic device is enabled to further perform the following step:

The electronic device displays an interface of the target application on the second screen when displaying the interface of the target application on the first screen.

That the electronic device keeps displaying an interface of the target application on the first screen includes: The electronic device keeps displaying the interface of the target application on the first screen and the second screen.

According to a third aspect, an embodiment of this application provides an electronic device, including one or more functional modules. The one or more functional modules may be configured to perform the display method for the foldable screen in any possible implementation of any one of the foregoing aspects.

According to a fourth aspect, this application provides a computer storage medium, including computer instructions. When the computer instructions run on an electronic device, a communication apparatus is enabled to perform the display method for the foldable screen in any possible implementation of any one of the foregoing aspects.

According to a fifth aspect, this application provides a computer program product. When the computer program product runs on a computer, the computer is enabled to perform the display method for the foldable screen in any possible implementation of any one of the foregoing aspects.

According to a sixth aspect, this application provides a chip, including a processor and an interface, where the processor and the interface cooperate with each other, so that the chip performs the display method for the foldable screen in any possible implementation of any one of the foregoing aspects.

It may be understood that the electronic device provided in the second aspect and the third aspect, the computer-readable storage medium provided in the fourth aspect, the computer program product provided in the fifth aspect, and the chip provided in the sixth aspect are all configured to perform the method provided in embodiments of this application. Therefore, for beneficial effects that can be achieved by the method, refer to beneficial effects in a corresponding method. Details are not described herein again.

**BRIEF DESCRIPTION OF DRAWINGS**

FIG. 1 is a schematic diagram of a product form of an electronic device according to an embodiment of this application;

FIG. 2 is a schematic diagram of a product form of an electronic device with an inward foldable screen according to an embodiment of this application;

FIG. 3 is a schematic diagram of another product form of an electronic device with an inward foldable screen according to an embodiment of this application;

FIG. 4 is a schematic diagram of a structure of an electronic device 100 according to an embodiment of this application;

FIG. 5A is a schematic diagram of a principle of calculating an included angle $\alpha$ between a screen A and a screen B according to an embodiment of this application;

FIG. 5B is a schematic diagram of an instance of a geographical coordinate system according to an embodiment of this application;

FIG. 6 is a schematic diagram of directions of an electronic device according to an embodiment of this application;

FIG. 7A is a schematic diagram of a software architecture of an electronic device according to an embodiment of this application;

FIG. 7B is a schematic diagram of another software architecture of an electronic device according to an embodiment of this application;

FIG. 8 is a schematic diagram of an application scenario according to an embodiment of this application;

FIG. 9A is a schematic diagram of a specific application scenario according to an embodiment of this application;

FIG. 9B to FIG. 9D are user interfaces according to an embodiment of this application;

FIG. 10 is a schematic flowchart of a display method for a foldable screen according to an embodiment of this application; and

FIG. 11 is a schematic flowchart of another display method for a foldable screen according to an embodiment of this application.

**DESCRIPTION OF EMBODIMENTS**

The following clearly describes technical solutions of this application in detail with reference to accompanying drawings. In descriptions of embodiments of this application, "/" means "or" unless otherwise specified. For example, A/B may indicate A or B. In this specification, "and/or" describes only an association relationship between associated objects and indicates that three relationships may exist. For example, A and/or B may indicate the following three cases: Only A exists, both A and B exist, and only B exists. In addition, in the descriptions of embodiments of this application, "a plurality of" means two or more.

The following terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more than two.

A term "user interface (user interface, UI)" in the following embodiments of this application is a medium interface for interaction and information exchange between an application or an operating system and a user, and the user interface implements conversion between an internal form of information and a form acceptable to the user. The user interface is source code written in a specific computer language like java or an extensible markup language (extensible markup language, XML). The source code of an interface is parsed and rendered on an electronic device, and finally presented as content that can be identified by the user. The user interface is usually represented in a form of a graphical user interface (graphical user interface, GUI), and is a user interface that is related to a computer operation and that is displayed in a graphic manner. The user interface may be visual interface elements such as text, an icon, a button, a menu, a tab, a text box, a dialog box, a status bar, a navigation bar, and a widget displayed on a display of the electronic device.

An embodiment of this application provides a display method for a foldable screen. The method may be applied to an electronic device 100 with a foldable screen. The electronic device 100 may be configured with two independent displays, and the two displays are respectively located on two sides of the electronic device 100. The two displays may have a same configuration, or may have different configurations. For example, the two displays may be made of a same material or different materials, and may have a same screen size or different screen sizes. For example, one display is a 6-inch OLED screen, and the other display is a 3.3-inch LCD screen. This is not limited in this embodiment of this application.

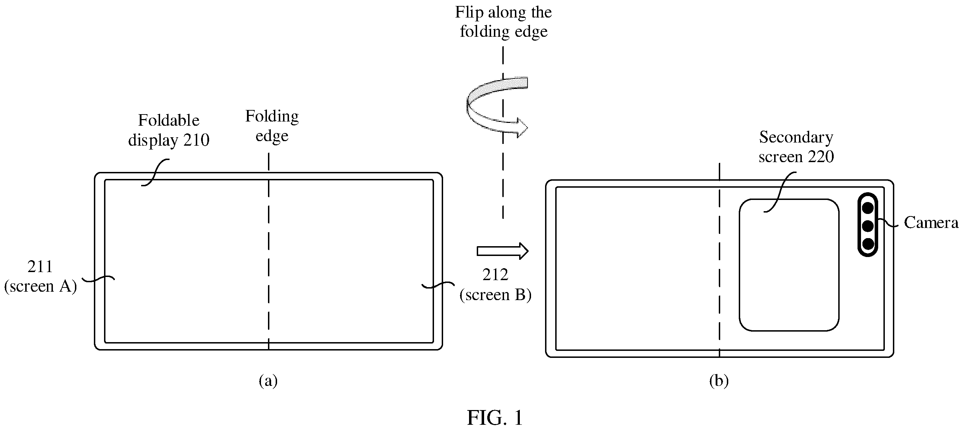

In this embodiment of this application, as shown in FIG. 1, FIG. 1 includes (a) and (b). As shown in FIG. 1, the electronic device 100 provides two displays. One display is a foldable display, and the other display is located on the back of the foldable display. The foldable display may be referred to as a foldable screen or a primary screen, and the other display is referred to as a secondary screen.

For example, as shown in (a) in FIG. 1, there is a foldable display 210 on a side of the electronic device 100. The foldable display 210 is a foldable flexible screen. The foldable display 210 is further divided into a first area 211 and a second area 212 by a folding edge. As shown in (b) in FIG. 1, there is a secondary screen 220 on another side of the electronic device 100. The secondary screen 220 may be a rigid screen, or may be a flexible screen. When the electronic device 100 is folded, the secondary screen 220 does not need to be folded. The secondary screen 220 may be disposed in an area opposite to the first area 211, or may be disposed in an area opposite to the second area 212.

In this embodiment of this application, the first area 211 may be referred to as a screen A, the first area 211 may be referred to as a screen B, and the secondary screen 220 may be referred to as a screen C. It should be noted that the folding edge may also be referred to as a rotating shaft.

As shown in FIG. 1, a camera may be disposed on the back of the screen A and the screen B of an inward foldable screen provided in this embodiment of this application. It should be noted that both the screen C and the camera may be located on the back of the screen A or the screen B, or the screen C and the camera may be respectively located on the back of the screen A or the screen B. This is not limited herein. In subsequent embodiments of this application, an example in which both the screen C and the camera may be located on the back of the screen A is used to describe the method provided in this embodiment of this application.

Folding manners of the foldable screen on the electronic device 100 may be classified into two types: One type is a foldable screen that is folded outward (an outward foldable screen for short), and the other type is a foldable screen that is folded inward (an inward foldable screen for short). An example in which a foldable screen may be folded to form the first area 211 and the second area 212 is used. After the outward foldable screen is folded, a display direction of the first area 211 and a display direction of the second area 212 are back to back. After the inward foldable screen is folded, a display direction of the first area 211 is opposite to a display direction of the second area 212.

In this embodiment of this application, the electronic device 100 uses an inward foldable screen, that is, a display direction of the first area 211 is opposite to a display direction of the second area 212.

The electronic device 100 may present at least three physical forms: an unfolded form, a semi-folded form, and a folded form (which may also be referred to as a closed form). Correspondingly, the foldable display 210 may also present at least three physical forms: an unfolded form, a semi-folded form, and a folded form.

In this embodiment of this application, the foldable screen of the electronic device 100 may be folded inward along the folding edge to form the screen A and the screen B, an included angle between the screen A and the screen B is $\alpha$, and a value range of $\alpha$ is [0°, 180°]. If $\alpha \in$ [0°, P1], the electronic device 100 may determine that the foldable screen is in a fully folded form; if $\alpha \in$ (P1, P2), the electronic device 100 may determine that the foldable screen is in a semi-folded form; and if $\alpha \in$ [P2, 180°], the electronic device 100 may determine that the foldable screen is in a fully unfolded form, where 0° < P1 < P2 < 180°. P1 and P2 may be preset angle thresholds. P1 and P2 may be determined based on a use habit of a large quantity of users using a foldable screen; or P1 and P2 may be set by a user in the electronic device 100.

For example, according to a use habit of most users, when the included angle $\alpha$ between the screen A and the screen B is greater than 100°, there is a high probability that the users want to use the screen A and the screen B as a whole (that is, as a complete display). When the included angle $\alpha$ between the screen A and the screen B is less than 80°, there is a high probability that the users want to use the screen A or the screen B independently, and the foldable screen may be in a fully folded form. When the included angle $\alpha$ between the screen A and the screen B is between 80° and 100°, there is a high probability that the users want to use the screen A and the screen B to display different display content, and the foldable screen may be in a semi-folded form. Therefore, a value range of the preset angle threshold P1 may be (0, 80°], and a value range of the preset angle threshold P2 may be [100°, 180°). For example, the preset angle threshold P1 may be 75°, and the preset angle threshold P2 may be 105°. The foregoing example is merely used to explain this application, and should not constitute a limitation.

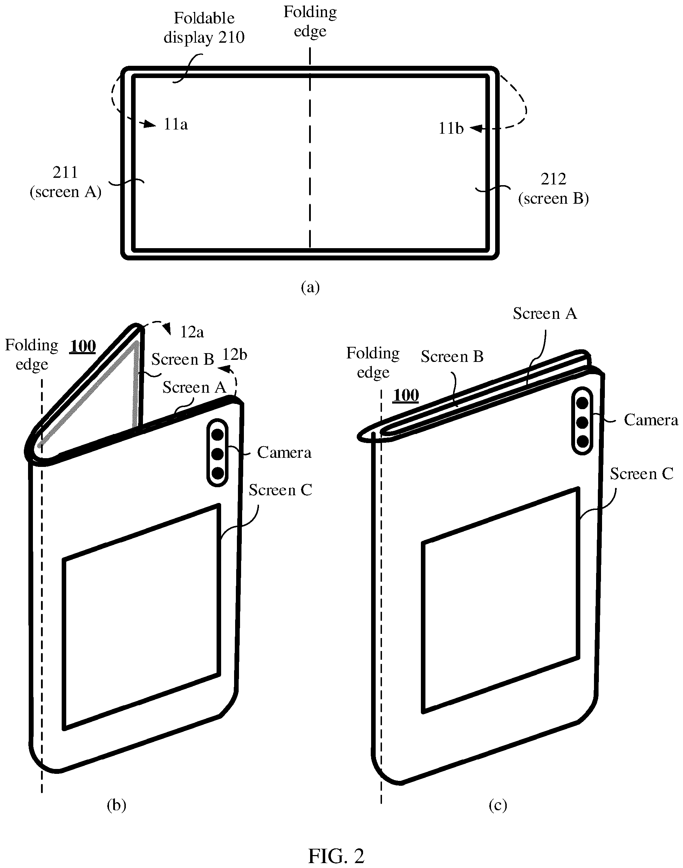

FIG. 2 is a schematic diagram of a product form of an electronic device 100 with an inward foldable screen according to an embodiment of this application, where (a) in FIG. 2 is a schematic diagram of a form of the inward foldable screen when the inward foldable screen is fully unfolded. The inward foldable screen may be folded along a folding edge in directions 11a and 11b shown in (a) in FIG. 2, to form a screen A and a screen B in a semi-folded form shown in (b) in FIG. 2. The inward foldable screen may continue to be folded along the folding edge in directions 12a and 12b shown in (b) in FIG. 2, to form the foldable screen in a fully folded form shown in (c) in FIG. 2. As shown in (c) in FIG. 2, after the foldable screen of the electronic device 100 is fully folded, the screen A is opposite to the screen B, and is invisible to a user.

It may be understood that, for the electronic device 100 with such an inward foldable screen, when the foldable screen is in a fully folded form, an interface may be displayed on a secondary screen; when the foldable screen is in a semi-folded form, an interface may be displayed on the screen A, the screen B, and the secondary screen; and when the foldable screen is in an unfolded form, an interface may be displayed on the screen A and the screen B.

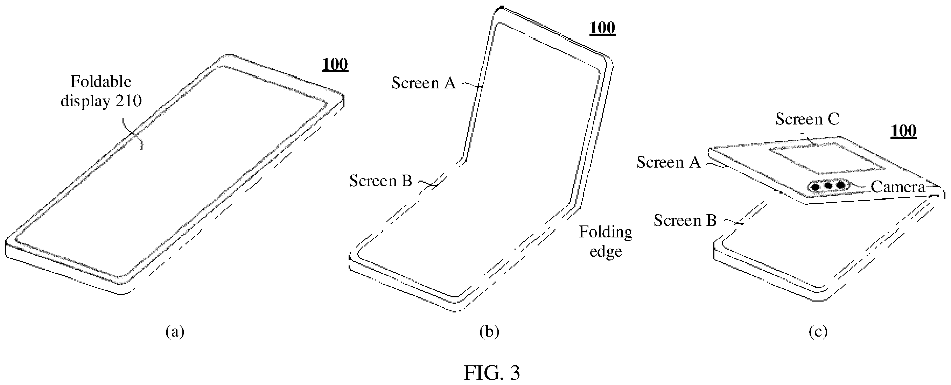

In FIG. 2, the foldable screen of the electronic device 100 is vertically folded, that is, the foldable screen is folded into a left screen and a right screen (namely, the screen A and the screen B) along the longitudinal folding edge on the foldable screen. In this embodiment of this application, the foldable screen of the electronic device 100 may alternatively be folded horizontally, that is, the foldable screen is folded into an upper screen and a lower screen (namely, the screen A and the screen B) along a horizontal folding edge on the foldable screen. For example, a foldable screen shown in (a) in FIG. 3 is sequentially folded along a folding edge in a horizontal direction of the foldable screen to form states shown in (b) in FIG. 3 and (c) in FIG. 3.

It should be noted that, in this embodiment of this application, at least two screens formed after the foldable screen is folded may be a plurality of independent screens, or may be one complete screen of an integrated structure. The complete screen is just folded to form at least two parts.

For example, the foldable screen may be a flexible foldable screen, and the flexible foldable screen includes a folding edge made of a flexible material. A part or all of the flexible foldable screen is made of a flexible material. At least two screens formed after the flexible foldable screen is folded are a complete screen of an integrated structure. The complete screen is just folded to form at least two parts.

For another example, the foldable screen may be a multi-screen foldable screen. The multi-screen foldable screen may include a plurality of (two or more) screens. The plurality of screens are a plurality of independent displays. The plurality of screens may be sequentially connected through foldable axes. Each screen may rotate around a foldable axis connected to the screen, to implement folding of the multi-screen foldable screen.

In subsequent embodiments of this application, an example in which a foldable screen is a flexible foldable screen that can be folded horizontally is used to describe the method provided in embodiments of this application.

For example, the electronic device 100 in embodiments of this application may be a device including the foldable screen like a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), and an augmented reality (augmented reality, AR)/a virtual reality (virtual reality, VR) device. A specific type of the electronic device 100 is not specially limited in this embodiment of this application.

The following describes the electronic device 100 provided in embodiments of this application with reference to the accompanying drawings.

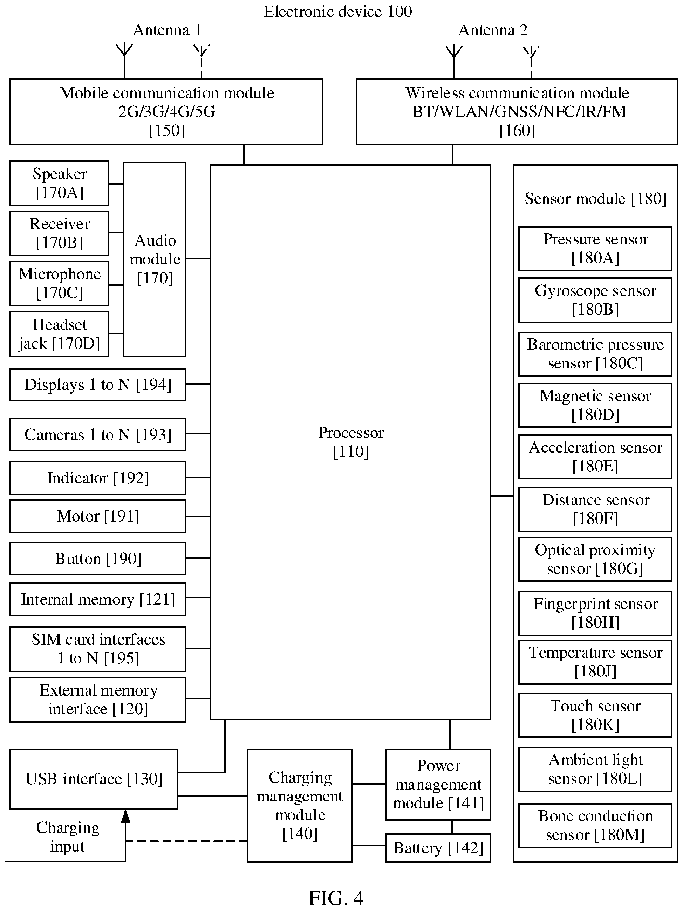

FIG. 4 is a schematic diagram of a structure of the electronic device 100.

The following uses the electronic device 100 as an example to describe embodiments in detail. It should be understood that the electronic device 100 shown in FIG. 4 is merely an example, and the electronic device 100 may have more or fewer components than those shown in FIG. 4, a combination of two or more components, or different component configurations. Various components shown in the figure may be implemented in hardware, software, or in a combination of hardware and software that includes one or more signal processing and/or application-specific integrated circuits.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the electronic device 100. In some other embodiments of this application, the electronic device 100 may include more or fewer components than those shown in the figure, or a combination of a part of the components, or splits from a part of the components, or an arrangement of different components. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be separate components, or may be integrated into one or more processors.

The controller may be a nerve center and a command center of the electronic device 100. The controller may generate an operation control signal based on instruction operation code and a timing signal, and complete control of instruction fetching and instruction execution.

The memory may be further disposed in the processor 110, and is configured to store instructions and data. In some embodiments, the memory in the processor 110 is a cache memory. The memory may store instructions or data that has been used or cyclically used by the processor 110. If the processor 110 needs to use the instructions or the data again, the processor 110 may directly invoke the instructions or the data from the memory. In this way, repeated access is avoided, and waiting time of the processor 110 is reduced. This improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, and includes a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be used for audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used for audio communication, to sample, quantize, and code an analog signal. In some embodiments, the audio module 170 may be coupled to the wireless communication module 160 through a PCM bus interface. In some embodiments, the audio module 170 may alternatively transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is used for asynchronous communication. The bus may be a bidirectional communication bus. The bus converts to-be-transmitted data between serial communication and parallel communication. In some embodiments, the UART interface is usually configured to connect the processor 110 and the wireless communication module 160. For example, the processor 110 communicates with a Bluetooth module in the wireless communication module 160 through the UART interface, to implement a Bluetooth function. In some embodiments, the audio module 170 may transfer an audio signal to the wireless communication module 160 through the UART interface, to implement a function of playing music by using a Bluetooth headset.

The MIPI interface may be configured to connect the processor 110 to peripheral devices such as the display 194 and the camera 193. The MIPI interfaces include a camera serial interface (camera serial interface, CSI) and a display serial interface (display serial interface, DSI). In some embodiments, the processor 110 communicates with the camera 193 through the CSI interface, to implement a photographing function of the electronic device 100. The processor 110 communicates with the display 194 through the DSI interface, to implement a display function of the electronic device 100.

The GPIO interface may be configured by using software. The GPIO interface may be configured for control signals or data signals. In some embodiments, the GPIO interface may be configured to connect the processor 110 to the camera 193, the display 194, the wireless communication module 160, the audio module 170, the sensor module 180, and the like. The GPIO interface may be further configured as the I2C interface, the I2S interface, the UART interface, the MIPI interface, or the like.

The USB interface 130 is an interface that conforms to a USB standard specification, and may be specifically a mini USB interface, a micro USB interface, a USB Type-C interface, or the like. The USB interface 130 may be configured to connect to a charger to charge the electronic device 100, may be configured to transmit data between the electronic device 100 and a peripheral device, or may be configured to connect to a headset, to play audio by using the headset. The interface may be further configured to connect to another electronic device, for example, an AR device.

It may be understood that an interface connection relationship between the modules shown in this embodiment of the present invention is merely an example for description, and does not constitute a structural limitation on the electronic device 100. In some other embodiments of this application, the electronic device 100 may alternatively use an interface connection manner different from that in the foregoing embodiment, or a combination of a plurality of interface connection manners.

The charging management module 140 is configured to receive a charging input from a charger. The charger may be a wireless charger or a wired charger. In some embodiments of wired charging, the charging management module 140 may receive a charging input from the wired charger through the USB interface 130. In some embodiments of wireless charging, the charging management module 140 may receive a wireless charging input through a wireless charging coil of the electronic device 100. The charging management module 140 may supply power to the electronic device by using the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, an external memory, the display 194, the camera 193, the wireless communication module 160, and the like. The power management module 141 may be further configured to monitor parameters such as a battery capacity, a quantity of battery cycles, and a battery health status (an electric leakage or an impedance). In some other embodiments, the power management module 141 may also be disposed in the processor 110. In some other embodiments, the power management module 141 and the charging management module 140 may alternatively be disposed in a same device.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may further be multiplexed, to improve antenna usage. For example, the antenna 1 may be multiplexed as a diversity antenna of a wireless local area network. In some other embodiments, the antenna may be used in combination with a tuning switch.

The mobile communication module 150 may provide a solution that is applied to the electronic device 100 and that includes wireless communication like 2G/3G/4G/5G. The mobile communication module 150 may include at least one filter, a switch, a power amplifier, a low noise amplifier (low noise amplifier, LNA), and the like. The mobile communication module 150 may receive an electromagnetic wave through the antenna 1, perform processing like filtering or amplification on the received electromagnetic wave, and transmit the electromagnetic wave to the modem processor for demodulation. The mobile communication module 150 may further amplify a signal modulated by the modem processor, and convert the signal into an electromagnetic wave through the antenna 1 for radiation. In some embodiments, at least some functional modules of the mobile communication module 150 may be disposed in the processor 110. In some embodiments, at least some functional modules of the mobile communication module 150 may be disposed in a same component as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. After being processed by the baseband processor, the low-frequency baseband signal is transmitted to the application processor. The application processor outputs a sound signal by using an audio device (not limited to the speaker 170A, the receiver 170B, or the like), or displays an image or a video by using the display 194. In some embodiments, the modem processor may be an independent device. In some other embodiments, the modem processor may be independent of the processor 110, and is disposed in a same device as the mobile communication module 150 or another functional module.

The wireless communication module 160 may provide a solution that is applied to the electronic device 100 and that includes wireless communication like a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, and an infrared (infrared, IR) technology. The wireless communication module 160 may be one or more devices that integrate at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave through the antenna 2 for radiation.

In some embodiments, the antenna 1 of the electronic device 100 is coupled to the mobile communication module 150, and the antenna 2 is coupled to the wireless communication module 160, so that the electronic device 100 can communicate with a network and another device through a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 implements a display function by using the GPU, the display 194, the application processor, and the like. The GPU is a microprocessor for image processing, and is connected to the display 194 and the application processor. The GPU is configured to perform mathematical and geometric calculations for graphics rendering. The processor 110 may include one or more GPUs that execute program instructions to generate or change display information.

The display 194 is configured to display an image, a video, and the like. The display 194 may include the inward foldable screen and the secondary screen. In some embodiments, the display 194 includes the inward foldable screen and the screen C, for example, as shown in FIG. 2 or FIG. 3.

The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

The electronic device 100 may implement a photographing function by using the ISP, the camera 193, the video codec, the GPU, the display 194, the application processor, and the like.

The ISP is configured to process data fed back by the camera 193. For example, during photographing, a shutter is opened, light is transferred to a camera photosensitive element through a lens, an optical signal is converted into an electrical signal, and the camera photosensitive element transfers the electrical signal to the ISP for processing, to convert the electrical signal into an image visible to a naked eye. The ISP may further perform algorithm optimization on noise of an image, brightness, and the like. The ISP may further optimize parameters such as an exposure and a color temperature of a photographing scene. In some embodiments, the ISP may be disposed in the camera 193.

The camera 193 is configured to capture a static image or a video. An object generates an optical image by using the lens and is projected to a photosensitive element. The photosensitive element may be a charge coupled device (charge coupled device, CCD) or a complementary metal-oxide-semiconductor (complementary metal-oxide-semiconductor, CMOS) optoelectronic transistor. The photosensitive element converts an optical signal into an electrical signal, and then transmits the electrical signal to the ISP for converting the electrical signal into a digital image signal. The ISP outputs the digital image signal to the DSP for processing. The DSP converts the digital image signal into an image signal in a standard format like RGB or YUV. In some embodiments, the electronic device 100 may include one or N cameras 193, where N is a positive integer greater than 1.

The digital signal processor is configured to process a digital signal, and may further process another digital signal in addition to a digital image signal. For example, when the electronic device 100 selects a frequency, the digital signal processor is configured to perform Fourier transform on frequency energy and the like.

The video codec is configured to compress or decompress a digital video. The electronic device 100 may support one or more video codecs. In this way, the electronic device 100 may play or record videos in a plurality of coding formats, for example, a moving picture experts group (moving picture experts group, MPEG) 1, an MPEG 2, an MPEG 3 and an MPEG 4.

The NPU is a neural-network (neural-network, NN) computing processor. The NPU quickly processes input information by referring to a structure of a biological neural network, for example, a transmission mode between human brain neurons, and may further continuously perform self-learning. The NPU can implement applications such as intelligent cognition of the electronic device 100. For example, image recognition, facial recognition, speech recognition, and a text understanding.

The external memory interface 120 may be configured to connect to an external memory card, for example, a micro SD card, to extend a storage capability of the electronic device 100. The external memory card communicates with the processor 110 through the external memory interface 120, to implement a data storage function. For example, files such as music and a video are stored in the external memory card.

The internal memory 121 may be configured to store computer-executable program code, where the executable program code includes instructions. The processor 110 runs the instructions stored in the internal memory 121, to perform various function applications and data processing of the electronic device 100. The internal memory 121 may include a program storage area and a data storage area. The program storage area may store an operating system, an application required by at least one function (for example, a sound playing function and an image playing function), and the like. The data storage area may store data (like audio data and a phone book) created during use of the electronic device 100. In addition, the internal memory 121 may include a high speed random access memory, and may further include a nonvolatile memory, for example, at least one magnetic disk storage device, a flash storage device, or a universal flash storage (universal flash storage, UFS).

The electronic device 100 may implement an audio function by using the audio module 170, the speaker 170A, the receiver 170B, the microphone 170C, the headset jack 170D, the application processor, and the like. For example, playing music, and recording.

The audio module 170 is configured to convert a digital audio signal into an analog audio signal for output, and is also configured to convert an analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "horn", is configured to convert an audio electrical signal into a sound signal. The electronic device 100 may listen to music or answer a hands-free call through the speaker 170A.

The receiver 170B, also referred to as an "earpiece", is configured to convert an audio electrical signal into a sound signal. When the electronic device 100 answers a call or receives voice information, the receiver 170B may be put close to a human ear to listen to a voice.

The microphone 170C, also referred to as a "mike" or a "voice tube", is configured to convert a sound signal into an electrical signal. When making a call or sending voice information, a user may make a sound by moving a human mouth close to the microphone 170C to input a sound signal into the microphone 170C. At least one microphone 170C may be disposed in the electronic device 100. In some other embodiments, two microphones 170C may be disposed in the electronic device 100, to collect a sound signal and further implement a noise reduction function. In some other embodiments, three, four, or more microphones 170C may alternatively be disposed in the electronic device 100, to collect a sound signal, implement noise reduction, and identify a sound source, to implement a directional recording function and the like.

The headset jack 170D is configured to connect to a wired headset. The headset interface 170D may be the USB interface 130, or may be a 3.5 mm open mobile electronic device platform (open mobile terminal platform, OMTP) standard interface, or a cellular telecommunications industry association of the USA (cellular telecommunications industry association of the USA, CTIA) standard interface.

The pressure sensor 180A is configured to sense a pressure signal, and may convert the pressure signal into an electrical signal. In some embodiments, the pressure sensor 180A may be disposed on the display 194. There are many types of pressure sensors 180A, for example, a resistive pressure sensor, an inductive pressure sensor, and a capacitive pressure sensor. The capacitive pressure sensor may include at least two parallel plates made of conductive materials. When a force is applied to the pressure sensor 180A, a capacitance between electrodes changes. The electronic device 100 determines pressure intensity based on a capacitance change. When a touch operation is performed on the display 194, the electronic device 100 detects intensity of the touch operation by using the pressure sensor 180A. The electronic device 100 may also calculate a touch position based on a detection signal of the pressure sensor 180A. In some embodiments, touch operations that are performed at a same touch location but have different touch operation intensity may correspond to different operation instructions. For example, when a touch operation whose touch operation intensity is less than a first pressure threshold is performed on a Messages application icon, an instruction for viewing a message is executed. When a touch operation whose touch operation intensity is greater than or equal to the first pressure threshold is performed on the Messages application icon, an instruction for creating a new message is executed.

The gyroscope sensor 180B may be configured to determine a motion posture of the electronic device 100. In some embodiments, angular velocities of the electronic device 100 around three axes (namely, x, y, and z axes) may be determined by using the gyroscope sensor 180B. The gyroscope sensor 180B may be configured to perform image stabilization during photographing. For example, when a shutter is pressed, the gyroscope sensor 180B detects an angle at which the electronic device 100 jitters, calculates, based on the angle, a distance for which a lens module needs to compensate, and enables the lens to cancel the jitter of the electronic device 100 through reverse motion, to implement image stabilization. The gyroscope sensor 180B may be further used in a navigation scenario and a motion sensing game scenario.

In this embodiment of this application, the display 194 of the electronic device 100 includes a plurality of screens, such as the screen A, the screen B, and the screen C shown in FIG. 1. Optionally, the gyroscope sensor 180B may be disposed on each of the plurality of screens, and is configured to measure an orientation (namely, a direction vector of the orientation) of a corresponding screen. The electronic device 100 may determine an included angle (for example, an included angle between the screen A and the screen B) between adjacent screens based on changing of an orientation angle that is of each screen and that is obtained by the gyroscope sensor 180B through measurement.

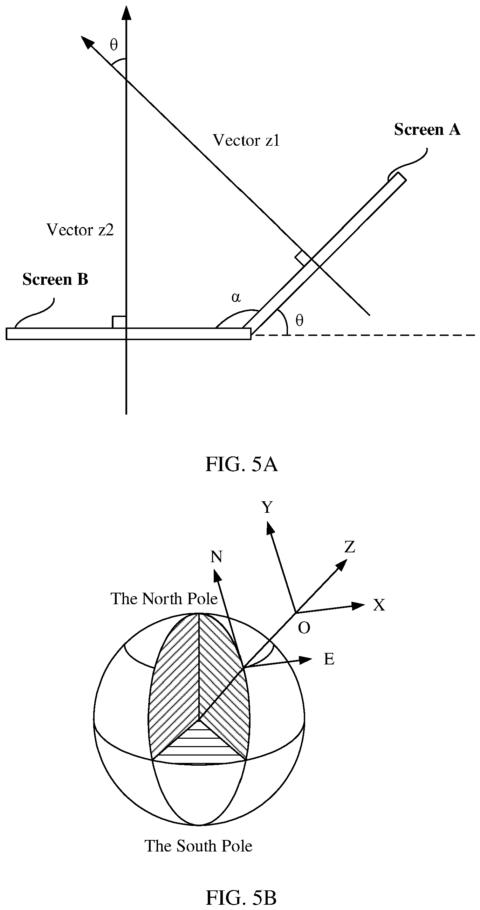

For example, a foldable screen of the electronic device 100 may be folded to form the screen A and the screen B shown in FIG. 5A. A gyroscope sensor A is disposed in the screen A, and a gyroscope sensor B is disposed in the screen B. In this embodiment of this application, a principle in which the gyroscope sensor A measures an orientation (namely, a direction vector of the orientation) of the screen A, a principle in which the gyroscope sensor B measures an orientation (namely, a direction vector of the orientation) of the screen B, and a principle in which the electronic device 100 calculates an included angle $\alpha$ between the screen A and the screen B based on the orientation of the screen A and the orientation of the screen B are described herein.

A coordinate system of the gyroscope sensor is a geographic coordinate system. As shown in FIG. 5B, an origin O of a geographic coordinate system is located at a point at which a carrier (namely, a device including a gyroscope sensor, like the electronic device 100) is located. An X axis points the east (E) along a local latitude line, a Y axis points the north (N) along a local meridian line, and a Z axis points upward along a local geographic perpendicular line, and forms a right-hand rectangular coordinate system together with the X axis and the Y axis. A plane formed by the X axis and the Y axis is a local horizontal plane, and a plane formed by the Y axis and the Z axis is a local meridian plane. Therefore, it may be understood that, a coordinate system of the gyroscope sensor is as follows: using the gyroscope sensor as the origin O, using a direction pointing to the east along the local latitude line as the axis X, using a direction pointing to the north along the local meridian line as the axis Y, and using a direction pointing upward along the local geographic perpendicular line (that is, in a direction of the geographic perpendicular line) as the axis Z.

The electronic device 100 may measure, by using the gyroscope sensor disposed in each screen, a direction vector of an orientation of each screen in a coordinate system of the gyroscope sensor disposed in the screen. For example, refer to a side view of the electronic device 100 shown in FIG. 5A. The electronic device 100 obtains, through measurement, that a direction vector of an orientation of the screen A in a coordinate system of the gyroscope sensor A is a vector $\vec{z1}$, and a direction vector of an orientation of the screen B in a coordinate system of the gyroscope sensor B is a vector z2. The electronic device 100 may calculate an included angle $\theta$ between the vector $\vec{z1}$ and the vector $\vec{z2}$ by using the following formula (1):

$$\theta = \text{arc } \cos\left(\frac{\vec{z1}\cdot\vec{z2}}{\left|\vec{z1}\right|\times\left|\vec{z2}\right|}\right) \text{ formula (1)}$$

It can also be learned from FIG. 5A that, because the vector $\vec{z1}$ is perpendicular to the screen A, and the vector $\vec{z2}$ is perpendicular to the screen B, the included angle $\alpha$ between the screen A and the screen B may be obtained: $\alpha = 180° - \theta$. That is, the electronic device 100 may determine the included angle $\alpha$ between the screen A and the screen B based on the direction vector (namely, the vector $\vec{z1}$) of the orientation of the screen A in the coordinate system of the gyroscope sensor A and the direction vector (namely, the vector $\vec{z2}$) of the orientation of the screen B in the coordinate system of the gyroscope sensor B that are obtained through measurement.

It should be noted that, although locations of the gyroscope sensors disposed on the screen A and the screen B do not overlap, that is, origins of the coordinate systems of the gyroscope sensors on the screen A and the screen B do not overlap, X axes, Y axes, and Z axes in the two coordinate systems are parallel. Therefore, it may be considered that the coordinate systems of the gyroscope sensors disposed on the screen A and the screen B are parallel. In this way, although the vector $\overrightarrow{z1}$ and the vector $\overrightarrow{z2}$ are not in a same coordinate system, because axes of the two coordinate systems are parallel, the included angle θ between the vector $\overrightarrow{z1}$ and the vector $\overrightarrow{z2}$ may still be calculated by using the foregoing formula (1).

In some embodiments, one or more other sensors may further cooperate with each other to measure the included angle α between the screen A and the screen B. For example, an acceleration sensor may be disposed in each of foldable screens. The electronic device 100 (for example, the processor 110) may measure, by using an acceleration sensor, a motion acceleration of each screen when the screen is rotated, and then calculate, based on the motion acceleration obtained through measurement, a rotation angle of one screen relative to another screen, namely, the included angle α between the screen A and the screen B.

In some other embodiments, the gyroscope sensor may be a virtual gyroscope sensor formed by cooperating with a plurality of other sensors. The virtual gyroscope sensor may be configured to calculate an included angle between adjacent screens of a foldable screen, namely, the included angle α between the screen A and the screen B.

In some other embodiments, an angle sensor is installed on a folding part (for example, a rotating shaft) of a folding line of the electronic device 100. The electronic device 100 may measure the included angle α formed between the screen A and the screen B by using the angle sensor disposed on the folding part of a foldable screen.

The magnetic sensor 180D includes a Hall effect sensor.

In this embodiment of this application, when the electronic device 100 locks a foldable screen and/or a secondary screen for display, if the Hall effect sensor reports an opening/closing status of the foldable screen, the electronic device 100 may unlock the locked state. For example, a folding edge of the electronic device 100 is perpendicular to a horizontal plane, the electronic device 100 displays an interface of an application on a foldable screen, and a secondary screen is off. In this case, a user fully folds the electronic device (that is, an included angle between the screen A and the screen B is 0°), and the electronic device 100 may turn off the foldable screen when receiving a flip closing message uploaded by the Hall effect sensor, and display an interface of the application on the secondary screen.

The acceleration sensor 180E may detect values of accelerations of the electronic device 100 in various directions (usually on three axes). A magnitude and a direction of gravity may be detected when the electronic device 100 is still. The acceleration sensor 180E may be further configured to identify a posture of the electronic device, and is used in an application like landscape/portrait switching and a pedometer.

In this embodiment of this application, the electronic device 100 may lock a current display status of the electronic device 100 when the folding edge of the electronic device 100 is nearly perpendicular to the horizontal plane (that is, an included angle between the folding edge and the horizontal plane is greater than a preset threshold). To be specific, regardless of changing of a folded form of the electronic device 100, a screen is not switched to display an interface, and a screen of a current display interface is kept to display an interface. For example, the electronic device 100 is in a semi-folded form, the electronic device 100 displays an interface of an application on a foldable screen, and a secondary screen is off. In this case, a user folds the electronic device 100 into a folded form. When determining that a folding edge of the electronic device 100 is nearly perpendicular to a horizontal plane, the electronic device 100 keeps displaying an interface of the application on the foldable screen. The secondary screen is off, and the electronic device 100 does not switch to the secondary screen to display an interface of the application. The electronic device 100 may be obtained through calculation by using data obtained by the acceleration sensor 180E, or may be determined by using another method. This is not limited herein.

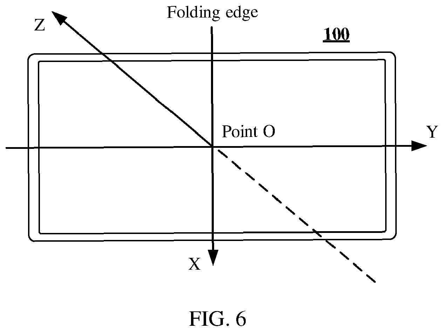

FIG. 6 is a schematic diagram of directions of an electronic device 100 according to an embodiment of this application. As shown in FIG. 6, a point O is an origin of coordinates, the origin of coordinates is a geometric center of the electronic device 100, and an X axis is parallel to a folding edge of the electronic device 100. In this embodiment of this application, the electronic device 100 may obtain, by using an acceleration sensor, a value of a gravity acceleration in a direction of the folding edge (namely, an X axis direction or an opposite direction of the X axis); and when the gravity acceleration in the direction is greater than a preset value, it is determined that the folding edge is nearly perpendicular to a horizontal plane.

The distance sensor 180F is configured to measure a distance. The electronic device 100 may measure a distance by using infrared or laser. In some embodiments, in a shooting scene, the electronic device 100 may perform ranging by using the distance sensor 180F to implement fast focusing.

For example, the optical proximity sensor 180G may include a light emitting diode (LED) and an optical detector like a photodiode. The light emitting diode may be an infrared light emitting diode. The electronic device 100 emits infrared light by using the light emitting diode. The electronic device 100 detects infrared reflected light from a nearby object by using the photodiode. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that a user holds the electronic device 100 close to an ear for a call, to automatically turn off a screen for power saving. The optical proximity sensor 180G may also be used in a flip cover mode or a pocket mode to automatically unlock or lock a screen.

The ambient light sensor 180L is configured to sense ambient light luminance. The electronic device 100 may adaptively adjust brightness of the display 194 based on sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket, to prevent an accidental touch.

The fingerprint sensor 180H is configured to collect a fingerprint. The electronic device 100 may use a feature of a collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy by using a temperature detected by the temperature sensor 180J. For example, when a temperature reported by the temperature sensor 180J exceeds a threshold, the electronic device 100 lowers performance of a processor near the temperature sensor 180J, to reduce power consumption and implement thermal protection. In some other embodiments, when the temperature is lower than another threshold, the electronic device 100 heats the battery 142, to avoid a case in which the electronic device 100 is abnormally shut down due to a low temperature. In some other embodiments, when the temperature is lower than still another threshold, the electronic device 100 boosts an output voltage of the battery 142, to avoid an abnormal shutdown caused by a low temperature.

The touch sensor 180K is also referred to as a "touch panel". The touch sensor 180K may be disposed on the display 194. The touch sensor 180K and the display 194 constitute a touchscreen, which is also referred to as a "touch screen". The touch sensor 180K is configured to detect a touch operation performed on or near the touch sensor 180K. The touch sensor may transfer a detected touch operation to the application processor, to determine a touch event type. A visual output related to the touch operation may be provided on the display 194. In some other embodiments, the touch sensor 180K may be also disposed on a surface of the electronic device 100 at a location different from a location of the display 194.

The bone conduction sensor 180M may obtain a vibration signal. In some embodiments, the bone conduction sensor 180M may obtain a vibration signal of a vibration bone of a human vocal part. The bone conduction sensor 180M may also contact a human pulse to receive a blood pressure beating signal. In some embodiments, the bone conduction sensor 180M may also be disposed in a headset, to obtain a bone conduction headset. The audio module 170 may obtain a voice signal through parsing based on the vibration signal that is of the vibration bone of the vocal part and that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch key. The electronic device 100 may receive a button input, and generate a signal input of a button related to a user setting and function control of the electronic device 100.

The motor 191 may generate a vibration prompt. The motor 191 may be used for an incoming call vibration prompt, or may be used for a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may further be customized.

The indicator 192 may be an indicator light, and may be configured to indicate a charging state and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be simultaneously inserted into a same SIM card interface 195. The plurality of cards may be of a same type or different types. The SIM card interface 195 may also be compatible with different types of SIM cards. The SIM card interface 195 may also be compatible with an external memory card. The electronic device 100 interacts with a network by using the SIM card, to implement functions such as a call and data communication. In some embodiments, the electronic device 100 uses an eSIM, namely, an embedded SIM card. The eSIM card may be embedded in the electronic device 100, and cannot be separated from the electronic device 100.

A software system of the electronic device 100 may use a layered architecture, an event-driven architecture, a microkernel architecture, a microservice architecture, or a cloud architecture. In this embodiment of the present invention, an Android system with a layered architecture is used as an example to describe a software structure of the electronic device 100.

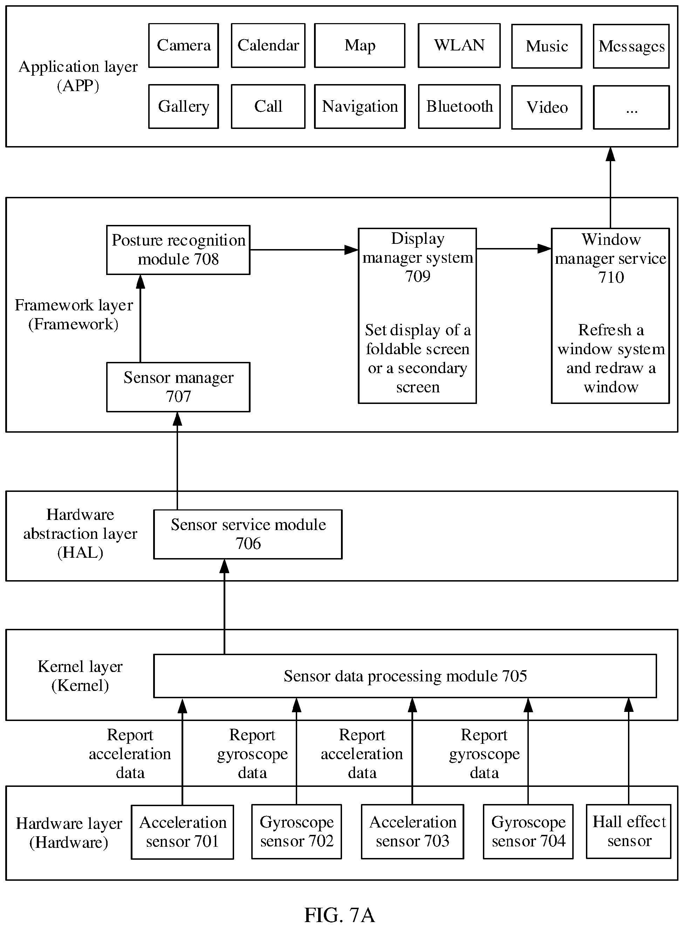

FIG. 7A is a block diagram of a software structure of an electronic device 100 according to an embodiment of this application.

The layered architecture divides software into layers, and each layer has a clear role and responsibility. The layers communicate with each other through software interfaces. In some embodiments, the Android system is divided into four layers from top to bottom: an application layer, an application framework layer, Android runtime (Android runtime), a system library, and a kernel layer.

The application (application, APP) layer may include a series of application packages. As shown in FIG. 7A, the application packages may include applications such as Camera, Gallery, Calendar, Call, Map, Navigation, WLAN, Bluetooth, Music, Video, and Messages.

The application framework (Framework) layer provides an application programming interface (application programming interface, API) and a programming framework for the applications at the application layer. The application framework layer includes some predefined functions. As shown in FIG. 7A, the framework layer may include a sensor manager (sensor manager) 707, a posture recognition (posture recognition) module 708, a display manager system (display manager) 709, and a window manager service (window manager service, WMS) 710. Optionally, the framework layer may further include an activity manager service (activity manager service, AMS), a content provider, a view system, a phone manager, a resource manager, a notification manager, and the like (not shown in the accompanying drawing).

The window manager is used to manage a window program. The window manager can obtain a size of a display, determine whether there is a status bar, lock a screen, and capture a screen.

A hardware abstraction layer (hardware abstraction layer, HAL) includes a sensor service (sensor service) module 706. The sensor service module 706 may be configured to report a processing result of a sensor data processing module 705 at the kernel layer to the sensor manager 707 at the framework layer.

The kernel (kernel) layer is a layer between hardware and software. The kernel layer may include the sensor data processing module 705. The sensor data processing module 705 may be used to obtain data reported by one or more sensors at a hardware (hardware) layer, process the data, and report a processing result to the sensor service module 706.

The hardware layer may include an acceleration sensor 701, a gyroscope sensor 702, an acceleration sensor 703, a gyroscope sensor 704, a Hall effect sensor, and the like. The acceleration sensor 701 and the gyroscope sensor 702 may be disposed on a screen A of the electronic device 100, and the acceleration sensor 703 and the gyroscope sensor 704 may be disposed on a screen B of the electronic device 100. The acceleration sensor 701 may be configured to measure acceleration data of the screen A, and report the acceleration data to the sensor data processing module 705. The acceleration sensor 703 may be configured to measure acceleration data of the screen B, and report the acceleration data to the sensor data processing module 705. The gyroscope sensor 702 may be configured to measure gyroscope data of the screen A, and report the gyroscope data to the sensor data processing module 705. The gyroscope sensor 704 may be configured to measure gyroscope data of the screen B, and report the gyroscope data to the sensor data processing module 705.

For example, when a user performs an operation (for example, an operation of folding a foldable screen) on the electronic device 100, the acceleration sensor 701, the gyroscope sensor 702, the acceleration sensor 703, and the gyroscope sensor 704 at the hardware layer may report, to the sensor data processing module 705 at the kernel layer, sensor data measured by the acceleration sensor 701, the gyroscope sensor 702, the acceleration sensor 703, and the gyroscope sensor 704 respectively. The sensor data processing module 705 may calculate, based on the sensor data reported by a plurality of sensors at the hardware layer, a direction vector $\vec{z1}$ of an orientation of the screen A, a direction vector $\vec{z2}$ of an orientation of the screen B, and an included angle $\alpha$ between the screen A and the screen B. Then, the sensor data processing module 705 may report the direction vector $\vec{z1}$ of the orientation of the screen A, the direction vector $z2$ of the orientation of the screen B, and the included angle $\alpha$ between the screen A and the screen B to the sensor manager 707 at the framework layer by using the sensor service module 706 at the hardware abstraction layer. The sensor manager 707 may be configured to send the vector $\vec{z1}$, the vector $\vec{z2}$, and the included angle $\alpha$ of A to the posture recognition module 708. The posture recognition module 708 may identify a posture type of the foldable screen of the electronic device 100 based on the vector $\vec{z1}$, the vector $\vec{z2}$, and the included angle $\alpha$, where the posture type includes a landscape/portrait posture of the foldable screen, whether a folding edge is perpendicular to a horizontal plane, and the like. The posture recognition module 708 sends the posture type to the display manager system (Display Manager System, DMS) 709. The display manager system 709 may set, based on the posture type, full screen display of the foldable screen, display of the screen A, display of the screen B, or the like. The display manager system 709 may indicate the window manager service 710 to create a window and update a window attribute (for example, a size or a location). The window manager service 710 may refresh a window system, redraw a window, and indicate an upper-layer application to adjust an attribute (for example, a size or a location) of a display element in the window. For example, when the foldable screen of the electronic device 100 is in a semi-folded form (the included angle $\alpha$ between the screen A and the screen B is between 80° and 100°), the electronic device 100 may display, on the screen A or the screen B, a display interface of a foreground application for starting a camera.

In some embodiments, the electronic device 100 may have a plurality of physical screens. For example, as shown in FIG. 1, the electronic device 100 includes the foldable screen and the screen C. The foldable screen is folded into the screen A and the screen B, and the screen C is on the back of the screen A.

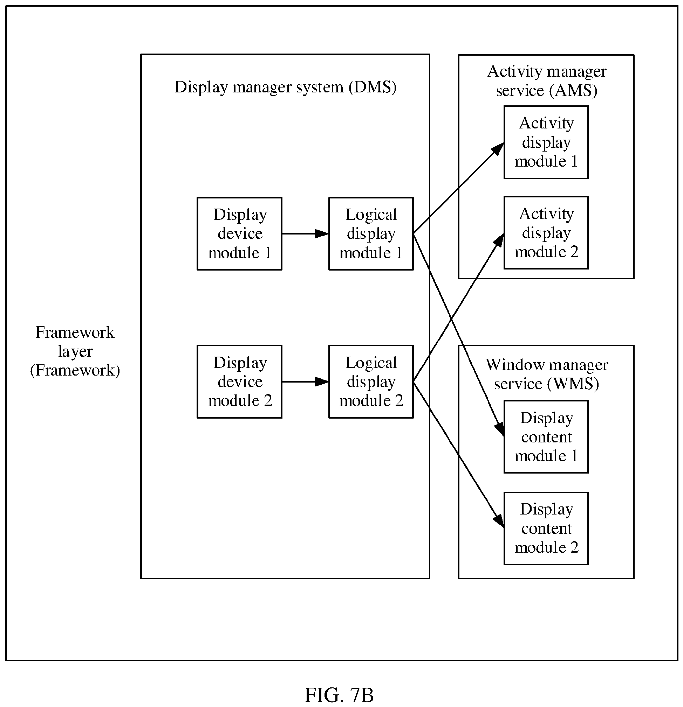

As shown in FIG. 7B, in a multi-screen display scenario, a framework layer in a software structure of the electronic device 100 may include display device (display device) information corresponding to each physical screen. For example, the foldable screen corresponds to a display device module 1. The display device module 1 is used to describe physical screen information of the foldable screen. The physical screen information includes resolution, pixels per inch (dots per inch, DPI), and the like. The screen C corresponds to a display device module 2, and the display device module 2 is used to describe physical screen information of the screen C. Each physical screen of the electronic device 100 further corresponds to a logical display (logical display) module. The logical module is used to describe logical display information of the physical screen. For example, the foldable screen of the electronic device 100 corresponds to a logical display module 1, and the screen C corresponds to a logical display module 2. Each logical display module may derive an activity display module and a display content module. For example, the logical display module 1 may derive an activity display module 1 and a display content module 1, and the logical display module 2 may derive an activity display module 2 and a display content module 2. The activity manager service (activity manager service, AMS) and the window manager service (WMS) may manage display logic of all upper-layer applications based on the foregoing activity display module and display content module. The electronic device 100 may start and display different activities on different logical display modules. For example, when the electronic device 100 starts automatic countdown photographing on a foreground application displayed on the foldable screen, the electronic device 100 may simultaneously start the screen C on the back of the foldable screen to synchronously display the countdown.

With reference to an application scenario, the following specifically describes a display method for a foldable screen provided in an embodiment of this application.

When the foldable screen of the electronic device 100 is in a folded form, an included angle (namely, a folding angle) $\alpha$ between a screen A and a screen B of the electronic device 100 □ [0°, P1]; when the foldable screen is in an unfolded form, the included angle (namely, a folding angle) $\alpha$ between the screen A and the screen B of the electronic device 100 □ [P2, 180°]; or when the foldable screen of the electronic device 100 is in a semi-folded form, the included angle (namely, a folding angle) $\alpha$ between the screen A and the screen B of the electronic device 100 □ (P1, P2), where 0° < P1 < P2 < 180°. When the included angle between the screen A and the screen B of the electronic device 100 is 0°, the foldable screen of the electronic device 100 is in a fully folded form. When the included angle between the screen A and the screen B of the electronic device 100 is 180°, the foldable screen of the electronic device 100 is in a fully unfolded form.

In a possible implementation, when the included angle $\alpha$ between the screen A and the screen B on the electronic device 100 □ (P1, P2), and retention time is greater than preset time (for example, 0.6 seconds), the electronic device 100 may determine that the foldable screen enters a semi-folded form.

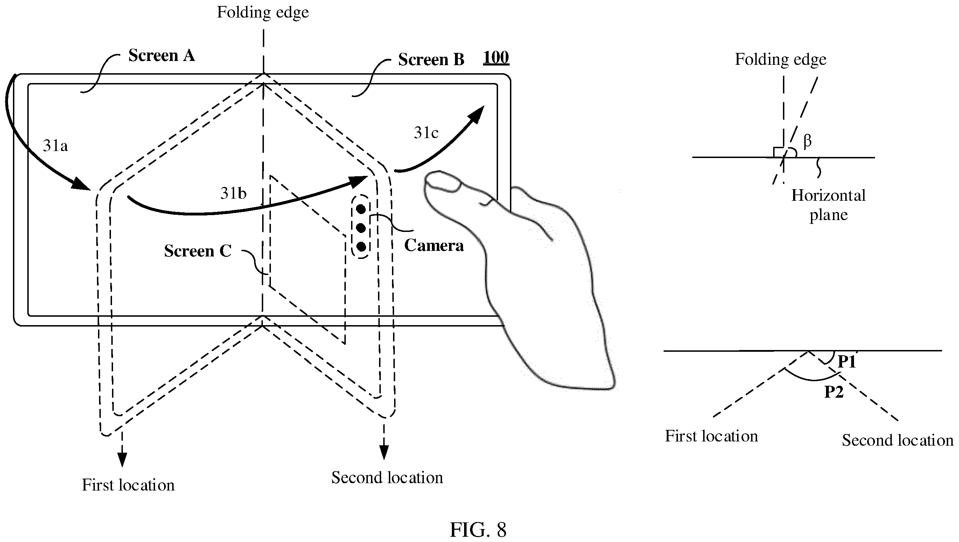

FIG. 8 shows an application scenario according to an embodiment of this application. As shown in FIG. 8, a user holds a screen B of an electronic device 100, and a camera and a screen C are on the back of a screen A. For a specific product form of the electronic device 100, refer to descriptions in FIG. 1, FIG. 2, and FIG. 3. Details are not described herein again.

As shown in FIG. 8, the user holds the electronic device 100, so that an included angle relationship $\beta$ between a folding edge and a horizontal plane is greater than a preset threshold. In this case, it may be considered that the folding edge is nearly perpendicular to the horizontal plane. The included angle $\beta$ is an angle formed by the folding edge and a projection of the folding edge on the horizontal plane, and the included angle $\beta$ is less than or equal to 90°.

As shown in FIG. 8, when a foldable screen of the electronic device 100 is in a fully unfolded form, an included angle $\alpha$ between the screen A and the screen B is 180°. In this case, it may be considered that the foldable screen is in the fully unfolded form. The user may fold the electronic device 100 along the folding edge in a direction 31a shown in FIG. 8. When the screen A of the electronic device 100 is located at a first location shown in FIG. 8, the included angle $\alpha$ between the screen A and the screen B is P2. Because P2 is a critical angle between an unfolded form and a semi-folded form of the foldable screen, it may be considered that the foldable screen enters the semi-folded form. The user may further fold the electronic device 100 along the folding edge in a direction 31b shown in FIG. 8. When the screen A of the electronic device 100 is located at a second location shown in FIG. 8, the included angle $\alpha$ between the screen A and the screen B is P1. Because P1 is a critical angle between a semi-folded form and a folded form of the foldable screen, it may be considered that the foldable screen enters the folded form. The user may further fold the electronic device 100 along the folding edge in a direction 31c shown in FIG. 8, until the included angle α between the screen A and the screen B is 0°. In this case, it may be considered that the foldable screen enters a fully folded form.

In another scenario, the user may unfold the electronic device 100 from a fully folded form to a fully unfolded form. A process of folding the electronic device 100 is opposite to the foregoing process, and details are not described herein again.

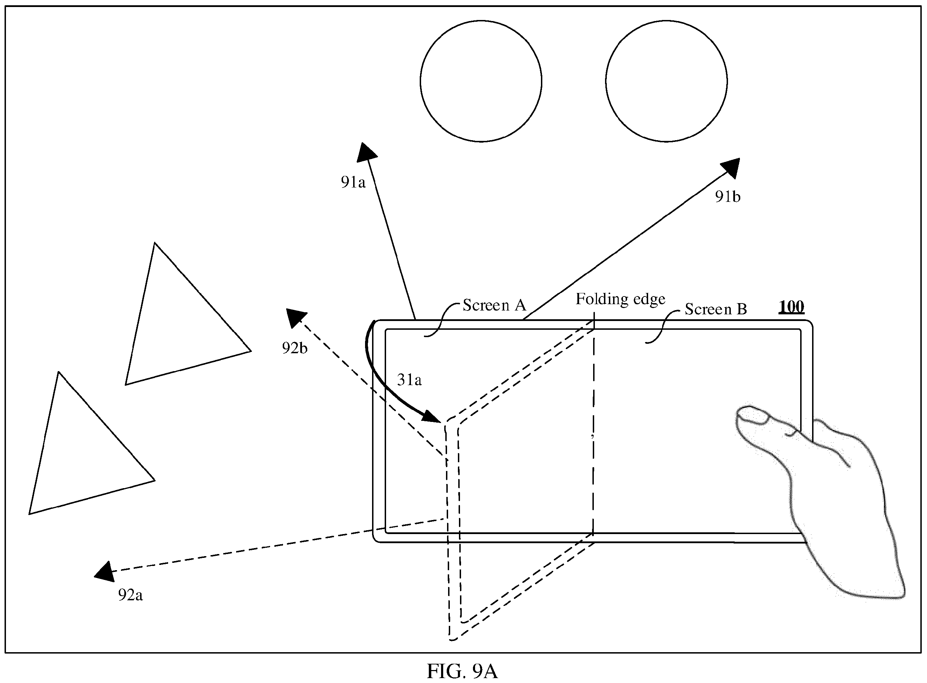

Based on the application scenario in FIG. 8, the following uses FIG. 9A as an example for detailed descriptions. For a specific product form and physical form of the electronic device 100 in FIG. 9A, refer to related descriptions in FIG. 8. Details are not described herein again.

As shown in FIG. 9A, when a foldable screen of the electronic device 100 is in a fully unfolded form, a photographing range of the electronic device 100 is a first photographing range, an area enclosed by arrow solid lines 91a and 91b in FIG. 9A is used to indicate the first photographing range, and two circles are located in the first photographing range. Further, the user may fold the electronic device 100 along a folding edge in a direction 31a shown in FIG. 9A. When a screen A of the electronic device 100 is located at a location of a dashed line shown in the figure, the photographing range of the electronic device 100 is a second photographing range. Arrow dashed lines 92a and 92b in FIG. 9A are used to indicate the second photographing range, and two triangles are located in the second photographing range.

In this application scenario, the user may perform photographing by using a camera of the electronic device 100. Specifically, during photographing or video recording of the electronic device, the user may fold the electronic device 100 along the folding edge in the direction 31a shown in FIG. 9A, and the electronic device 100 may display an interface of a camera application on the foldable screen and/or a secondary screen.

The electronic device determines, based on a form of the foldable screen, that an interface of an application is displayed on the foldable screen or the secondary screen. For example, when the foldable screen is in a folded form, the electronic device displays an interface of the application only on the secondary screen; or when the foldable screen is in a semi-folded form or an unfolded form, the electronic device displays an interface of the application only on the foldable screen. In this case, if the user changes the foldable screen from a semi-folded form to a folded form during photographing, the electronic device turns off the foldable screen and exits the interface of the application. As a result, the user cannot photograph a larger field of view.

In this embodiment of this application, a display status of the electronic device 100 does not depend on a folding status of the foldable screen, and is related to an included angle relationship between the folding edge and a horizontal plane. For example, in the scenario shown in FIG. 9A, when holding the electronic device 100, the user may make the folding edge of the electronic device 100 nearly perpendicular to the ground. In this case, the user may randomly switch the foldable screen among a folded form, a semi-folded form, and an unfolded form during video recording, and a case in which the video recording is affected because the foldable screen is turned off and the application exits does not occur. It may be understood that the user may perform photographing at a large field of view by using the electronic device 100. The method can meet a requirement of the user, and improve user experience.

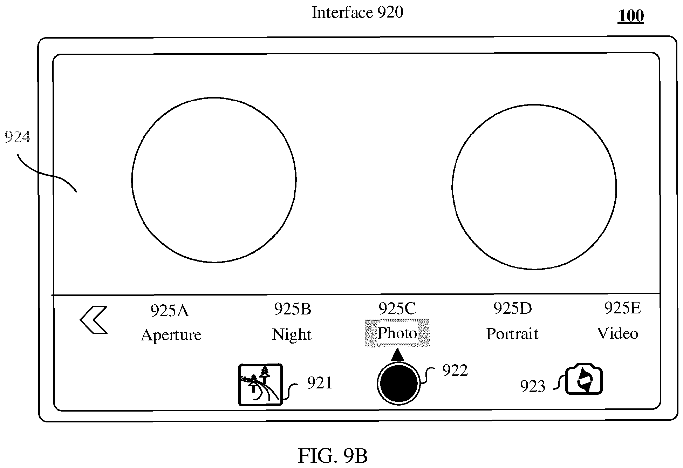

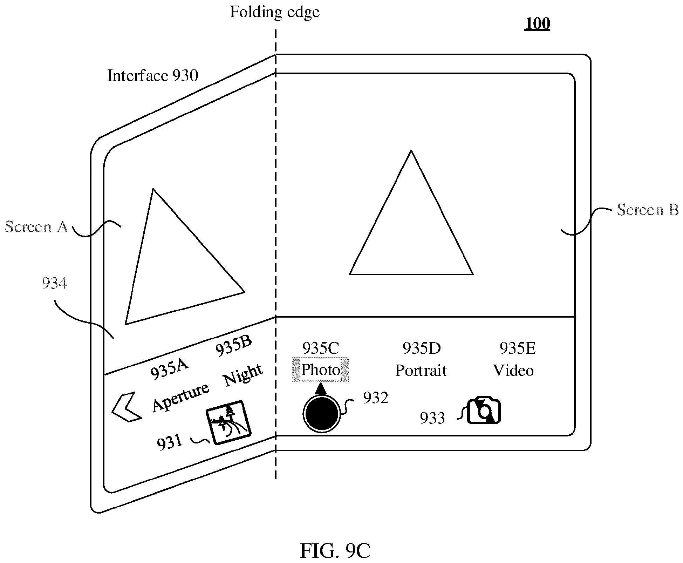

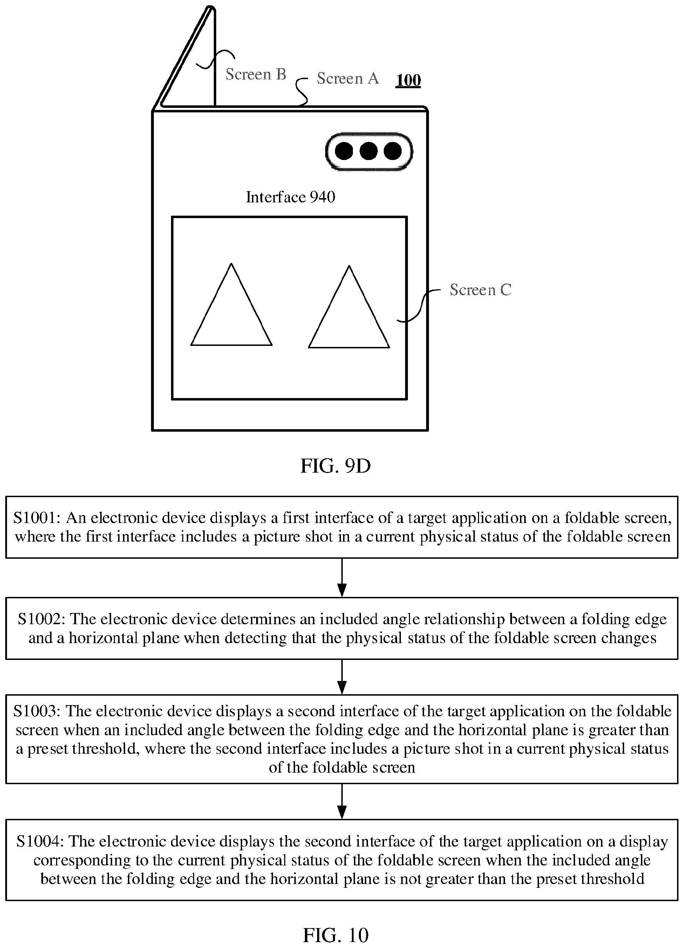

The following uses FIG. 9B, FIG. 9C, and FIG. 9D as examples to describe user interfaces that may appear in the application scenario shown in FIG. 9A. FIG. 9B to FIG. 9D are user interfaces when the electronic device 100 performs photographing by using a camera application.

As shown in FIG. 9A, when the photographing range of the electronic device 100 is the first photographing range, the electronic device 100 may display, on the foldable screen, an interface 920 of a camera application shown in FIG. 9B. As shown in FIG. 9B, the interface 920 of the camera application may display a photographed image echo control 921, a photographing control 922, a camera switch control 923, a picture 924 captured by a camera, and one or more photographing mode controls (for example, an "Aperture" control 925A, a "Night" control 925B, a "Photo" control 925C, a "Portrait" control 925D, and a "Video" control 925E). The picture 924 captured by the camera includes the two circles in the first photographing range, and the photographed image echo control 921 may be used to display a photographed image. The photographing control 922 may be used to trigger saving of an image photographed by the camera. The camera switch control 923 may be used to switch between cameras for photographing. The photographing mode controls may be used to trigger an image processing procedure corresponding to a photographing mode to be enabled. For example, the "Night" control 925B may be used to trigger an increase in brightness, color richness, and the like in a photographed image. The "Portrait" control 925D may be used to trigger a person background in a photographed image to be blurred.

In this embodiment of this application, when the electronic device 100 detects that the foldable screen changes from an unfolded form to a semi-folded form, and the folding edge is approximately perpendicular to the horizontal plane, the electronic device 100 may keep the interface of the camera application displayed on a current screen, and do not switch screen display. For example, as shown in FIG. 9A, when the photographing range of the electronic device 100 is the second photographing range, the electronic device is in a semi-folded form. When the electronic device 100 detects that the foldable screen changes from an unfolded form to a semi-folded form, the electronic device 100 may display, on the foldable screen, an interface 930 of a camera application shown in FIG. 9C.

The interface 930 of the camera application may include a photographed image echo control 931, a photographing control 932, a camera switch control 933, a picture 934 captured by a camera, and one or more photographing mode controls (for example, an "Aperture" control 935A, a "Night" control 935B, a "Photo" control 935C, a "Portrait" control 935D, and a "Video" control 935E). The picture 934 captured by the camera includes the two triangles in the second photographing range. Interface elements in the interface 930 of the camera application are the same as interface elements in the interface 920 of the camera application shown in FIG. 9B. Therefore, for descriptions of the interface 930 of the camera application, refer to the text descriptions of the interface 920 of the camera application in the embodiment shown in FIG. 9B. Details are not described herein again.

In a possible implementation, the secondary screen may simultaneously display a user interface displayed on the foldable screen or a part of content in a user interface displayed on the foldable screen. In addition, both the foldable screen and the secondary screen may receive a user operation performed by the user on a display, and perform, in response to an operation performed by a user on a control on the display, a step corresponding to the control, for example, exiting an application. FIG. 9D is used as an example. FIG. 9D shows an interface 930 displayed on the secondary screen of the electronic device 100 when the user interface shown in FIG. 9B is displayed on the foldable screen of the electronic device 100. As shown in FIG. 9D, the interface 930 may display only a picture captured by the camera, that is, simultaneously display the picture 934 captured by the camera in FIG. 9B. A display scale of the interface 930 is different from a display scale of the interface 920 of the camera application, and display scales of interface elements may also be different.

Based on the scenario shown in FIG. 8, a display method for a foldable screen provided in an embodiment of this application is described.

FIG. 10 is a schematic flowchart of a display method for a foldable screen according to an embodiment of this application. The method may be applied to the electronic device 100. The electronic device 100 is configured with two independent displays, the two displays are respectively located on two sides of the electronic device 100, and one of the two displays is a foldable screen. As shown in FIG. 10, the method may include the following steps.

S1001: An electronic device displays a first interface of a target application on a foldable screen, where the first interface includes a picture shot in a current physical status of the foldable screen.

The physical status of the foldable screen includes an unfolded form, a semi-folded form, and a folded form. When the foldable screen is in an unfolded form, an included angle between a screen A and a screen B is greater than a first angle threshold; when the foldable screen is in a semi-folded form, the included angle between the screen A and the screen B is between the first angle threshold and a second angle threshold; and when the foldable screen is in a folded form, the included angle between the screen A and the screen B is less than the second angle threshold. The first angle threshold is greater than the second angle threshold.

For example, the first angle threshold is P2, and the second angle threshold is P1. When the foldable screen of the electronic device 100 is in a folded form, an included angle (namely, a folding angle) $\alpha$ between the screen A and the screen B of the electronic device 100 $\square$ [0°, P1]; when the foldable screen is in an unfolded form, the included angle (namely, a folding angle) $\alpha$ between the screen A and the screen B of the electronic device 100 $\square$ [P2, 180°]; and when the foldable screen of the electronic device 100 is in a semi-folded form, the included angle (namely, a folding angle) $\alpha$ between the screen A and the screen B of the electronic device 100 $\square$ (P1, P2), where 0° < P1 < P2 < 180°.

The target application may be a photographing application, for example, a camera application or an application having a photographing function.

In an implementation, if a current physical status of the foldable screen of the electronic device is an unfolded form, the first interface of the target application includes a picture shot in the current unfolded form of the electronic device. The application scenario shown in FIG. 9A is used as an example. When the foldable screen of the electronic device is in an unfolded form, the photographing range of the electronic device is the first photographing range. When detecting a user operation performed by a user on a control having a photographing function, the electronic device may display the interface 920 shown in FIG. 9B, that is, the interface 920 is the first interface. The interface 920 includes a picture shot in the unfolded form of the electronic device, namely, content within the first photographing range.

In another implementation, if a current physical status of the foldable screen of the electronic device is a semi-folded form, the first interface of the target application includes a picture shot in the current semi-folded form of the electronic device. The application scenario shown in FIG. 9A is used as an example. The user folds the electronic device 100 along the folding edge in the direction 31a shown in FIG. 9A. When the screen A of the electronic device 100 is located at the location of the dashed line shown in the figure, and the foldable screen of the electronic device is in a semi-folded form, the photographing range of the electronic device is the second photographing range. When detecting a user operation performed by the user on a control having a photographing function, the electronic device may display the user interface 930 shown in FIG. 9C, that is, the user interface 930 is the first interface. The user interface 930 includes a picture shot in the semi-folded form of the electronic device, namely, content within the second photographing range.

**S1002: The electronic device determines an included angle relationship between the folding edge and a horizontal plane when detecting that the physical status of the foldable screen changes.**

Changing of the physical status of the foldable screen includes: changing the foldable screen from an unfolded form to a semi-folded form, changing the foldable screen from a semi-folded form to a folded form, changing the foldable screen from a folded form to a semi-folded form, and changing the foldable screen from a semi-folded form to an unfolded form.

In a possible implementation, the electronic device may determine, based on the included angle between the screen A and the screen B of the foldable screen, whether the physical status of the foldable screen changes. For example, when the included angle between the screen A and the screen B of the foldable screen is a critical angle, it is determined that the physical status of the foldable screen changes. The critical angle may be the first angle threshold and the second angle threshold, for example, P1 and P2. For another example, when time for which the included angle between the screen A and the screen B of the foldable screen remains between the first angle threshold and the second angle threshold is greater than a first time threshold (for example, 0.6 seconds), the electronic device detects that the foldable screen changes to a semi-folded form; or when time for which the included angle between the screen A and the screen B is less than the second angle threshold is greater than a second time threshold (for example, 0.6 seconds), the electronic device detects that the foldable screen changes to a folded form. The electronic device may determine the included angle between the screen A and the screen B by using an acceleration sensor or another method. For details, refer to related content in FIG. 4. Details are not described herein again.

The included angle relationship between the folding edge and the horizontal plane is an angle formed by the folding edge and a projection of the folding edge on the horizontal plane. It should be noted that, when an included angle between the folding edge and the horizontal plane is greater than a preset threshold, it may be considered that the folding edge is nearly perpendicular to the horizontal plane; or when an included angle between the folding edge and the horizontal plane is not greater than a preset threshold, it may be considered that the folding edge is not nearly perpendicular to the horizontal plane. The preset threshold may be determined according to an actual situation, and is not limited herein. For example, the preset threshold may be 45°. When the included angle relationship between the folding edge and the horizontal plane is greater than 45°, it may be considered that the folding edge is nearly perpendicular to the horizontal plane.

In some embodiments, the electronic device may determine, based on a gravity acceleration of a display in a direction of the folding edge, whether an included angle relationship between the folding edge and the horizontal plane is greater than a preset threshold (that is, whether the folding edge is nearly perpendicular to the horizontal plane). Specifically, the electronic device may obtain the gravity acceleration of the display in the direction of the folding edge. When detecting that a physical status of the foldable screen changes, the electronic device compares the gravity acceleration with a preset value. If the gravity acceleration is greater than the preset value, it is determined that the folding edge is nearly perpendicular to the horizontal plane. For a specific principle, refer to related content in FIG. 6. Details are not described herein again.

Specifically, an acceleration sensor may be disposed on the display of the electronic device to obtain detection data, to determine the included angle relationship between the folding edge and the horizontal plane. The display may be any one or more of the foregoing foldable screen, secondary screen, screen A, or screen B.

For example, the electronic device may set an acceleration sensor on each foldable screen, and the electronic device may obtain, in real time or periodically by using the acceleration sensor, a value of a gravity acceleration of the foldable screen in a direction of a folding edge. When detecting that the foldable screen changes from an unfolded form to a semi-folded form or from a semi-folded form to a folded form, the electronic device determines a relationship between the folding edge and the horizontal plane based on the gravity acceleration of the foldable screen in the direction of the folding edge. For example, when the gravity acceleration of the foldable screen in the direction of the folding edge is greater than 9.6, the electronic device determines that the folding edge of the electronic device is nearly perpendicular to the horizontal plane.

For another example, the electronic device may set an acceleration sensor on both the screen A and the screen B, and the electronic device may obtain, in real time or periodically by using the acceleration sensor, values of gravity accelerations of the screen A and the screen B in a direction of a folding edge. When detecting that the foldable screen changes from an unfolded form to a semi-folded form or from a semi-folded form to a folded form, the electronic device determines a relationship between the folding edge and the horizontal plane based on the values of gravity accelerations of the screen A and the screen B in the direction of the folding edge. For example, when the values of gravity accelerations of the screen A and the screen B in the direction of the folding edge are both greater than 9.6, the electronic device determines that the folding edge of the electronic device is nearly perpendicular to the horizontal plane. For another example, when an average of the values of gravity accelerations of the screen A and the screen B in the direction of the folding edge is greater than 9.6, the electronic device determines that the folding edge of the electronic device is nearly perpendicular to the horizontal plane.

**S1003: The electronic device displays a second interface of the target application on the foldable screen when the included angle between the folding edge and the horizontal plane is greater than the preset threshold, where the second interface includes a picture shot in a current physical status of the foldable screen.**

In some embodiments, when determining that the included angle between the folding edge and the horizontal plane is greater than the preset threshold, the electronic device may display the second interface of the target application on the foldable screen, where the second interface includes a picture shot in a current physical status of the foldable screen. In other words, when the folding edge of the electronic device is nearly perpendicular to the horizontal plane, even if the physical status of the foldable screen changes, the electronic device still keeps displaying an interface of the target application on the foldable screen.

It may be understood that, when the folding edge of the electronic device is nearly perpendicular to the horizontal plane, the electronic device locks the foldable screen as a display of a current display interface. As shown in FIG. 9A, the user may change the included angle $\alpha$ between the screen A and the screen B within a preset range to obtain a photographing range of a large field of view, and the foldable screen does not turn off. The preset range is not limited. For example, the preset range may be that $\alpha$ is [0°, 180°]. In other words, the user may randomly change the included angle between the screen A and the screen B, and the electronic device still keeps displaying an interface of the target application on the foldable screen. For another example, the preset range may also be that $\alpha$ is (0°, 180°). In other words, the user may randomly change the included angle between the screen A and the screen B within an angle range other than a fully unfolded state and a fully folded state, and the electronic device keeps displaying an interface of the target application on the foldable screen. In the fully unfolded state and the fully folded state, the electronic device may switch to another display for display or exit a display status.

With reference to FIG. 9A to FIG. 9D, several possible implementations are described as examples.

In an implementation, when detecting that the foldable screen changes from an unfolded form to a semi-folded form, the electronic device determines that the folding edge is nearly perpendicular to the horizontal plane, and the electronic device displays a second interface of the target application on the foldable screen, where the second interface includes a picture shot by the electronic device when the foldable screen is in the semi-folded form. The application scenario shown in FIG. 9A is used as an example. When the foldable screen of the electronic device is in an unfolded form, the electronic device displays the interface 920 shown in FIG. 9B on the foldable screen, and the interface 920 is the first interface. When the foldable screen of the electronic device changes from an unfolded form to a semi-folded form, the photographing range of the electronic device is the second photographing range. When determining that the folding edge is nearly perpendicular to the horizontal plane, the electronic device may display the user interface 930 shown in FIG. 9C. The user interface 930 is the second interface. It may be understood that, when the foldable screen is in an unfolded form and a semi-folded form, that is, in a process in which the included angle between the screen A and the screen B of the electronic device changes from 180° to the second angle threshold, the electronic device always displays an interface of the target application on the foldable screen.

In another implementation, when detecting that the foldable screen changes from a folded form to a semi-folded form, the electronic device determines that the folding edge is nearly perpendicular to the horizontal plane, and the electronic device displays a second interface of the target application on the foldable screen, where the second interface includes a picture shot by the electronic device when the foldable screen is in the folded form.

In still another implementation, when detecting that the foldable screen changes from a folded form to a semi-folded form and from a semi-folded form to a folded form, the electronic device determines that the folding edge is nearly perpendicular to the horizontal plane, and the electronic device displays a second interface of the target application, where the second interface includes a picture shot by the electronic device when the foldable screen is in a semi-folded form or a folded form. The application scenario shown in FIG. 9A is used as an example. In an entire process in which the foldable screen changes from a fully unfolded form to a fully folded form, that is, in a process in which the included angle between the screen A and the screen B of the electronic device changes from 180° to 0°, the electronic device always displays an interface of the target application on the foldable screen.

In some other embodiments, when displaying the second interface of the target application on the foldable screen, the electronic device still detects the included angle relationship between the folding edge and the horizontal plane. When the included angle between the folding edge and the horizontal plane is not greater than the preset threshold, step S 1004 is performed. That is, when determining that the folding edge is nearly perpendicular to the horizontal plane, the electronic device locks the display to display an interface of the target application. Then, the user tilts the electronic device until the folding edge is not nearly perpendicular to the horizontal plane, and the electronic device may exit the locked state, and display the second interface of the target application on a display corresponding to a current physical status of the foldable screen. For content of displaying an interface on the display corresponding to the current physical status of the foldable screen, refer to content in the following step S 1004.

**S1004: The electronic device displays the second interface of the target application on a display corresponding to a current physical status of the foldable screen when the included angle between the folding edge and the horizontal plane is not greater than the preset threshold, where the second interface includes a picture shot in the current physical status of the foldable screen.**

A correspondence between a physical status of the foldable screen and the display may be set according to an actual situation, and is not limited herein. For example, if a display corresponding to a folded form is a secondary screen, when the foldable screen is in a folded form, the electronic device displays an interface of an application on the secondary screen; or if a display corresponding to a semi-folded form or an unfolded form is a primary screen, when the foldable screen is in a semi-folded form or an unfolded form, the electronic device may display an interface of an application on the primary screen. For another example, if a display corresponding to a fully folded form is a secondary screen, when the foldable screen is in a fully folded form, an interface may be displayed on the secondary screen; if displays corresponding to a semi-folded form are a screen A, a screen B, and a secondary screen, when the foldable screen is in a semi-folded form, an interface may be displayed on the screen A, the screen B, and the secondary screen; or if displays corresponding to an unfolded form are a screen A and a screen B, an interface may be displayed on the screen A and the screen B.

In an implementation, the electronic device currently displays an interface of the target application only on the foldable screen. When it is determined that the folding edge is not nearly perpendicular to the horizontal plane, if a display corresponding to a current physical status of the foldable screen is a secondary screen, the electronic device may switch to the secondary screen to display a second interface of the target application, where the second interface includes a picture shot in the current physical status of the foldable screen.

For example, the foldable screen of the electronic device is in a semi-folded form, currently, only a first interface of a camera application is displayed on the foldable screen, a secondary screen is in an off state, and a second interface includes a picture shot by the electronic device when the foldable screen is in the semi-folded form. The user folds the foldable screen. When detecting that the foldable screen changes from the semi-folded form to a folded form, the electronic device determines that the folding edge is not nearly perpendicular to the horizontal plane. Because a display corresponding to the folded form is a secondary screen, the electronic device may switch an interface of the camera application to the secondary screen for display. In other words, the secondary screen displays the second interface of the camera application, and the foldable screen is in an off state. The second interface includes a picture shot by the electronic device when the foldable screen is in the folded form.

In some embodiments, after performing step S 1002, the electronic device directly performs step S 1004. That is, when performing step S 1002, the electronic device determines that the included angle between the folding edge and the horizontal plane is not greater than the preset threshold, and displays the second interface of the target application on a display corresponding to a current physical status of the foldable screen.

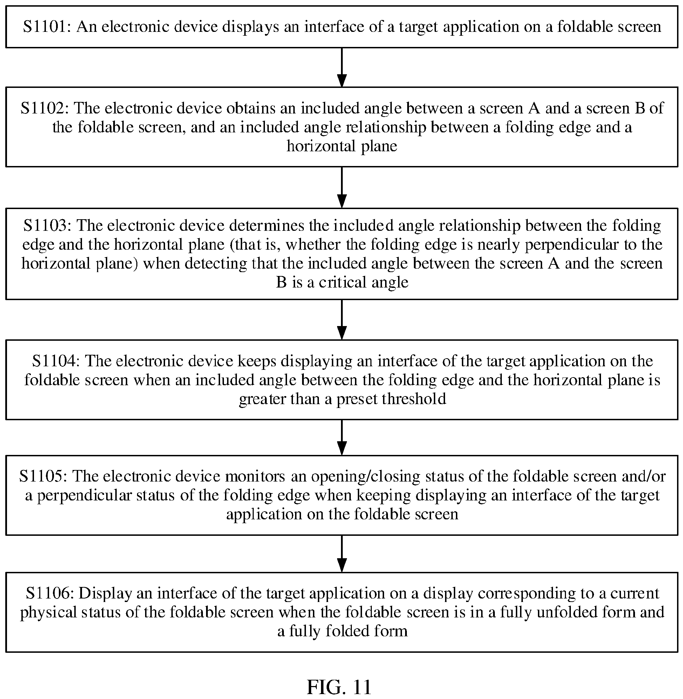

As shown in FIG. 11, the following describes another display method for a foldable screen according to an embodiment of this application.

The method may be applied to the electronic device 100. The electronic device 100 is configured with two independent displays, the two displays are respectively located on two sides of the electronic device 100, and one of the two displays is a foldable screen. As shown in FIG. 11, the method may include the following steps.

**S1101: An electronic device displays an interface of a target application on a foldable screen.**

In some embodiments, the electronic device displays an interface of the target application only on the foldable screen, and a secondary screen is off. For details, refer to related content in step S 1001, and details are not described herein again.

**S1102: The electronic device obtains an included angle between a screen A and a screen B of the foldable screen, and an included angle relationship between a folding edge and a horizontal plane.**

In an implementation, after displaying an interface of the target application on the foldable screen, the electronic device may monitor, by using a display manager system, an included angle between the screen A and the screen B and an included angle relationship between the folding edge and the horizontal plane. For details, refer to related content in FIG. 7A, and details are not described herein again. For example, an acceleration sensor, a gyroscope sensor, and a Hall effect sensor in the electronic device may report, in real time or periodically to a sensor data processing module, sensor data measured by the acceleration sensor, the gyroscope sensor, and the Hall effect sensor respectively. The sensor data processing module may calculate an included angle between the screen A and the screen B and an included angle relationship between the folding edge and the horizontal plane based on the sensor data.

The Hall effect sensor is configured to detect an opening/closing status of the foldable screen. The opening/closing status of the foldable screen includes a fully unfolded form and a fully folded form of the foldable screen. It may be understood that, when the foldable screen is closed, the foldable screen is in a fully folded form. In other words, the Hall effect sensor may sense a state in which the foldable screen is folded to a fully folded form and is unfolded from a fully folded form.

**S1103: The electronic device determines the**

**included angle relationship between the folding edge and the horizontal plane (that is, whether the folding edge is nearly perpendicular to the horizontal plane) when detecting that the included angle between the screen A and the screen B is a critical angle.**

It may be understood that when the included angle between the screen A and the screen B is a critical angle, a physical form of the foldable screen changes. For specific implementation of step S 1103, refer to related content of step S 1002, and details are not described herein again.

S1104: The electronic device keeps displaying an interface of the target application **on the foldable screen when the included angle between the folding edge and the horizontal plane is greater than a preset threshold.**

The scenario in FIG. 8 is used as an example. The folding edge of the electronic device is nearly perpendicular to the horizontal plane. If the electronic device displays an interface of a camera application only on the foldable screen, the user randomly changes the included angle between the screen A and the screen B within a preset range, and the electronic device always displays an interface of the camera application on the foldable screen. It may be understood that the electronic device enters a screen-locked state.

The preset range is not limited. For example, the preset range may be that $\alpha$ is [0°, 180°]. In other words, the user may randomly change the included angle between the screen A and the screen B, and the electronic device still keeps displaying an interface of the target application on the foldable screen. For another example, the preset range may also be that $\alpha$ is (0°, 180°). In other words, the user may randomly change the included angle between the screen A and the screen B within an angle range other than a fully unfolded state and a fully folded state, and the electronic device keeps displaying an interface of the target application on the foldable screen. In the fully unfolded state and the fully folded state, the electronic device may switch to another display for display or exit a display status.

S1105: The electronic device monitors the opening/closing status of the foldable screen and/or a perpendicular status of the folding edge when keeping displaying an interface of the target application on the foldable screen.

In an implementation, when the electronic device keeps displaying an interface of the target application on the foldable screen, the electronic device may no longer obtain the included angle between the screen A and the screen B of the foldable screen, and obtain only the opening/closing status of the foldable screen by using the Hall effect sensor. For example, when the electronic device keeps displaying an interface of the target application on the foldable screen, the electronic device may no longer obtain the included angle between the screen A and the screen B of the foldable screen, and learn only, by using the Hall effect sensor, whether the foldable screen is in a fully folded form or in a fully unfolded form.

For example, an acceleration sensor, a gyroscope sensor, and a Hall effect sensor in the electronic device may report, in real time or periodically to a sensor data processing module, sensor data measured by the acceleration sensor, the gyroscope sensor, and the Hall effect sensor respectively. When the electronic device keeps displaying an interface of the target application on the foldable screen, the sensor data processing module may stop calculating the included angle between the screen A and the screen B, and report only data of the Hall effect sensor to a display manager system. The data of the Hall effect sensor is used to indicate an opening/closing status of the foldable screen. Further, a display manager system 709 may determine, based on the opening/closing status of the foldable screen, whether to exit a current screen-locked state.

In another implementation, when the electronic device keeps displaying an interface of the target application on the foldable screen, the electronic device may further determine a perpendicular status of the folding edge (that is, whether the folding edge is nearly perpendicular to the horizontal plane). Further, when the folding edge is not nearly perpendicular to the horizontal plane, the electronic device may display an interface of the target application on a display corresponding to a current physical status of the foldable screen. For a specific process in which the electronic device determines the included angle relationship between the folding edge and the horizontal plane and displays an interface of the target application on the display corresponding to the current physical status of the foldable screen, refer to the foregoing related content.

S1106: Display an interface of the target application on the display corresponding to the current physical status of the foldable screen when the foldable screen is in a fully unfolded form or a fully folded form.

In an implementation, when the electronic device keeps displaying an interface of the target application on the foldable screen, the electronic device may no longer obtain the included angle between the screen A and the screen B of the foldable screen, and learn only, by using the Hall effect sensor, whether the foldable screen is in a fully folded form or in a fully unfolded form. When learning, by using the Hall effect sensor, whether the foldable screen is in a fully folded form or in a fully unfolded form, the electronic device displays an interface of the target application on a display corresponding to a current physical status of the foldable screen. For a correspondence between a physical status of the foldable screen and a display, refer to the foregoing related content. Details are not described herein again.

For example, the electronic device enters a screen-locked state, and in this case, the foldable screen displays an interface of the target application. In response to an operation of fully folding a foldable machine by the user, the Hall effect sensor reports that the foldable screen is in a fully folded form. If a corresponding display is a secondary screen when the foldable screen is in a folded form, the electronic device switches an interface of the target application to the secondary screen for display, and turns off the foldable screen.

An embodiment of this application further provides an electronic device. The electronic device includes one or more processors and one or more memories. The one or more memories are coupled to the one or more processors, the one or more memories are configured to store computer program code, the computer program code includes computer instructions, and when the one or more processors execute the computer instructions, the electronic device is enabled to perform the method described in the foregoing embodiment.

An embodiment of this application further provides a computer program product including instructions. When the computer program product runs on an electronic device, the electronic device is enabled to perform the method described in the foregoing embodiment.

An embodiment of this application further provides a computer-readable storage medium, including instructions. When the instructions run on an electronic device, the electronic device is enabled to perform the method described in the foregoing embodiment.

It may be understood that the implementations of this application may be randomly combined to achieve different technical effects.

All or some of the foregoing embodiments may be implemented by using software, hardware, firmware, or any combination thereof. When software is used for implementation, the implementation may be totally or partially implemented in a form of a computer program product. The computer program product includes one or more computer instructions. When computer program instructions are loaded and executed on a computer, all or some of the procedures or functions according to this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, like a server or a data center integrating one or more usable media. The usable medium may be a magnetic medium (for example, a floppy disk, a hard disk, or a magnetic tape), an optical medium (for example, a DVD), a semiconductor medium (for example, a solid state disk Solid State Disk), or the like.

A person of ordinary skill in the art may understand that all or a part of the procedures in the methods in embodiments are implemented. The procedures may be implemented by a computer program instructing relevant hardware. The program may be stored in a computer-readable storage medium. When the program is executed, the procedure of each method embodiment described above may be included. The foregoing storage medium includes any medium that can store program code, for example, a ROM, a random access memory RAM, a magnetic disk, or an optical disc.

In conclusion, the foregoing descriptions are merely embodiments of the technical solutions of this application, but are not intended to limit the protection scope of this application. Any modification, equivalent replacement, or improvement made according to disclosure of this application shall fall within the protection scope of this application.

**Claims**

1. A display method for a foldable screen, applied to an electronic device, wherein the electronic device comprises a first screen and a second screen, the first screen and the second screen are respectively located on two sides of the electronic device, one of the first screen and the second screen is a foldable screen, and the foldable screen is foldable along a folding edge; and the method comprises:

   determining, by the electronic device, an included angle between the folding edge and a horizontal plane when an interface of a target application is displayed on the first screen and if it is detected that the foldable screen changes from a first physical state to a second physical state; and
   keeping, by the electronic device, displaying an interface of the target application on the first screen when the included angle between the folding edge and the horizontal plane is greater than a preset threshold; or
   displaying, by the electronic device, an interface of the target application on the second screen when the included angle between the folding edge and the horizontal plane is not greater than a preset threshold.

2. The method according to claim 1, wherein the determining, by the electronic device, an included angle between the folding edge and a horizontal plane comprises:

   obtaining, by the electronic device, a gravity acceleration of a display in a direction of the folding edge; and
   when the gravity acceleration is greater than a preset value, determining, by the electronic device, that the included angle between the folding edge and the horizontal plane is greater than the preset threshold.

3. The method according to claim 1 or 2, wherein the method further comprises:

determining, by the electronic device, the included angle between the folding edge and the horizontal plane when keeping displaying an interface of the target application on the first screen; and
displaying, by the electronic device, an interface of the target application on the second screen when the included angle between the folding edge and the horizontal plane is not greater than the preset threshold.

4. The method according to claim 1 or 2, wherein the foldable screen is foldable along the folding edge to form a folding angle, and the method further comprises:

detecting, by the electronic device, the folding angle by using a Hall effect sensor when keeping displaying an interface of the target application on the first screen; and
displaying, by the electronic device, an interface of the target application on the second screen when determining that the folding angle is 0° or 180°.

5. The method according to claims 1 to 4, wherein the first screen is the foldable screen, and the second screen is a secondary screen;

the determining, by the electronic device, an included angle between the folding edge and a horizontal plane when an interface of a target application is displayed on the first screen and if it is detected that the foldable screen changes from a first physical state to a second physical state comprises: displaying, by the electronic device, a first interface of the target application on the foldable screen in response to a user operation for the target application, wherein the first interface comprises a picture shot in the first physical state;
the keeping, by the electronic device, displaying an interface of the target application on the first screen when the included angle between the folding edge and the horizontal plane is greater than a preset threshold comprises: displaying, by the electronic device, a second interface on the foldable screen, wherein the second interface comprises a picture shot in the second physical state; and
the displaying, by the electronic device, an interface of the target application on the secondary screen when the included angle between the folding edge and the horizontal plane is not greater than a preset threshold comprises: displaying, by the electronic device, the second interface on the secondary screen.

6. The method according to claims 1 to 5, wherein a physical status of the foldable screen comprises an unfolded form, a semi-folded form, and a folded form.

7. The method according to claims 1 to 6, wherein the method further comprises:

displaying, by the electronic device, an interface of the target application on the second screen when displaying the interface of the target application on the first screen; and
the keeping, by the electronic device, displaying an interface of the target application on the first screen comprises: keeping, by the electronic device, displaying the interface of the target application on the first screen and the second screen.

8. An electronic device, comprising: a first screen, a second screen, an acceleration sensor, one or more cameras, one or more processors, and one or more memories, wherein the first screen and the second screen are respectively located on two sides of the electronic device, one of the first screen and the second screen is a foldable screen, and the foldable screen is foldable along a folding edge; the foldable screen, the acceleration sensor, the one or more cameras, and the one or more memories are coupled to the one or more processors;

the acceleration sensor is configured to detect data, so that the one or more processors determine an included angle relationship between the folding edge and a horizontal plane; and
the one or more memories are configured to store computer program code, wherein the computer program code comprises computer instructions, and when the computer instructions run on the processors, the electronic device is enabled to perform the following steps:

determining, by the electronic device, an included angle between the folding edge and the horizontal plane when an interface of a target application is displayed on the first screen and if it is detected that the foldable screen changes from a first physical state to a second physical state; and
keeping, by the electronic device, displaying an interface of the target application on the first screen when the included angle between the folding edge and the horizontal plane is greater than a preset threshold; or displaying, by the electronic device, an interface of the target application on the second screen when the included angle between the folding edge and the horizontal plane is not greater than a preset threshold.

9. The electronic device according to claim 8, wherein when the computer instructions run on the processors, the electronic device is enabled to further perform the following steps:

obtaining, by the electronic device, a gravity acceleration of a display in a direction of the folding edge; and
when the gravity acceleration is greater than a preset value, determining, by the electronic device, that the included angle between the folding edge and the horizontal plane is greater than the preset threshold.

10. The electronic device according to claim 8 or 9, wherein when the computer instructions run on the processors, the electronic device is enabled to further perform the following steps:

determining, by the electronic device, the included angle between the folding edge and the horizontal plane when keeping displaying an interface of the target application on the first screen; and
displaying, by the electronic device, an interface of the target application on the second screen when the included angle between the folding edge and the horizontal plane is not greater than the preset threshold.

11. The electronic device according to claim 8 or 9, wherein the foldable screen is foldable along the folding edge to form a folding angle, and when the computer instructions run on the processors, the electronic device is enabled to further perform the following steps:

detecting, by the electronic device, the folding angle by using a Hall effect sensor when keeping displaying an interface of the target application on the first screen; and
displaying, by the electronic device, an interface of the target application on the second screen when determining that the folding angle is 0° or 180°.

12. The electronic device according to claims 8 to 11, wherein the first screen is the foldable screen, and the second screen is a secondary screen; and when the computer instructions run on the processors, the electronic device is enabled to further perform the following steps:

the determining, by the electronic device, an included angle between the folding edge and the horizontal plane when an interface of a target application is displayed on the first screen and if it is detected that the foldable screen changes from a first physical state to a second physical state comprises: displaying, by the electronic device, a first interface of the target application on the foldable screen in response to a user operation for the target application, wherein the first interface comprises a picture shot in the first physical state;
the keeping, by the electronic device, displaying an interface of the target application on the first screen when the included angle between the folding edge and the horizontal plane is greater than a preset threshold comprises: displaying, by the electronic device, a second interface on the foldable screen, wherein the second interface comprises a picture shot in the second physical state; and
the displaying, by the electronic device, an interface of the target application on the secondary screen when the included angle between the folding edge and the horizontal plane is not greater than a preset threshold comprises: displaying, by the electronic device, the second interface on the secondary screen.

13. The electronic device according to claims 8 to 12, wherein a physical status of the foldable screen comprises an unfolded form, a semi-folded form, and a folded form.

14. The electronic device according to claims 8 to 13, wherein when the computer instructions run on the processors, the electronic device is enabled to further perform the following step:

displaying, by the electronic device, an interface of the target application on the second screen when displaying the interface of the target application on the first screen; and
the keeping, by the electronic device, displaying an interface of the target application on the first screen comprises: keeping, by the electronic device, displaying the interface of the target application on the first screen and the second screen.

15. An electronic device, comprising one or more functional modules, wherein the one or more functional modules are configured to perform the display method for the foldable screen according to any one of claims 1 to 7.

16. A computer-readable storage medium, comprising computer instructions, wherein when the computer instructions run on an electronic device, the electronic device is enabled to perform the display method for the foldable screen according to any one of claims 1 to 7.

17. A chip, comprising:
a processor and an interface, wherein the processor and the interface cooperate with each other, so that the chip performs the display method for the foldable screen according to any one of claims 1 to 7.

FIG. 1

FIG. 2

Foldable
display 210

Screen A

Screen B

Folding
edge

Screen C

Screen A

Camera

Screen B

**100**

**100**

**100**

(a)

(b)

(c)

FIG. 3

EP 4 421 626 A1

Electronic device 100

Antenna 1

Antenna 2

| Mobile communication module 2G/3G/4G/5G [150] | Wireless communication module BT/WLAN/GNSS/NFC/IR/FM [160] |
|---|---|

Speaker [170A]

Receiver [170B]

Audio module [170]

Microphone [170C]

Headset jack [170D]

Displays 1 to N [194]

Cameras 1 to N [193]

Indicator [192]

Motor [191]

Button [190]

Internal memory [121]

SIM card interfaces 1 to N [195]

External memory interface [120]

USB interface [130]

Charging input

Processor [110]

Sensor module [180]

Pressure sensor [180A]

Gyroscope sensor [180B]

Barometric pressure sensor [180C]

Magnetic sensor [180D]

Acceleration sensor [180E]

Distance sensor [180F]

Optical proximity sensor [180G]

Fingerprint sensor [180H]

Temperature sensor [180J]

Touch sensor [180K]

Ambient light sensor [180L]

Bone conduction sensor [180M]

Charging management module [140]

Power management module [141]

Battery [142]

FIG. 4

FIG. 5A

FIG. 5B

FIG. 6

| Application layer (APP) | Camera | Calendar | Map | WLAN | Music | Messages |
|---|---|---|---|---|---|---|
| | Gallery | Call | Navigation | Bluetooth | Video | ... |

Framework layer (Framework)

Posture recognition module 708 → Display manager system 709 — Set display of a foldable screen or a secondary screen → Window manager service 710 — Refresh a window system and redraw a window

Sensor manager 707

Hardware abstraction layer (HAL)

Sensor service module 706

Kernel layer (Kernel)

Sensor data processing module 705

Report acceleration data · Report gyroscope data · Report acceleration data · Report gyroscope data

Hardware layer (Hardware)

Acceleration sensor 701 | Gyroscope sensor 702 | Acceleration sensor 703 | Gyroscope sensor 704 | Hall effect sensor

FIG. 7A

FIG. 7B

Folding edge

**Screen A**          **Screen B**  **100**

31a

31c

31b

**Screen C**          **Camera**

First location          Second location

Folding edge

β

Horizontal plane

P1

P2

First location          Second location

FIG. 8

FIG. 9A

Interface 920                                          **100**

924

925A          925B          925C          925D          925E
Aperture      Night         Photo         Portrait      Video

921                                       922           923

FIG. 9B

FIG. 9C

Screen B — Screen A **100**

Interface 940

Screen C

FIG. 9D

S1001: An electronic device displays a first interface of a target application on a foldable screen, where the first interface includes a picture shot in a current physical status of the foldable screen

S1002: The electronic device determines an included angle relationship between a folding edge and a horizontal plane when detecting that the physical status of the foldable screen changes

S1003: The electronic device displays a second interface of the target application on the foldable screen when an included angle between the folding edge and the horizontal plane is greater than a preset threshold, where the second interface includes a picture shot in a current physical status of the foldable screen

S1004: The electronic device displays the second interface of the target application on a display corresponding to the current physical status of the foldable screen when the included angle between the folding edge and the horizontal plane is not greater than the preset threshold

FIG. 10

S1101: An electronic device displays an interface of a target application on a foldable screen

S1102: The electronic device obtains an included angle between a screen A and a screen B of the foldable screen, and an included angle relationship between a folding edge and a horizontal plane

S1103: The electronic device determines the included angle relationship between the folding edge and the horizontal plane (that is, whether the folding edge is nearly perpendicular to the horizontal plane) when detecting that the included angle between the screen A and the screen B is a critical angle

S1104: The electronic device keeps displaying an interface of the target application on the foldable screen when an included angle between the folding edge and the horizontal plane is greater than a preset threshold

S1105: The electronic device monitors an opening/closing status of the foldable screen and/or a perpendicular status of the folding edge when keeping displaying an interface of the target application on the foldable screen

S1106: Display an interface of the target application on a display corresponding to a current physical status of the foldable screen when the foldable screen is in a fully unfolded form and a fully folded form

FIG. 11

## INTERNATIONAL SEARCH REPORT

| International application No. |
| --- |
| **PCT/CN2022/136542** |

**A. CLASSIFICATION OF SUBJECT MATTER**

G06F9/451(2018.01)i

According to International Patent Classification (IPC) or to both national classification and IPC

**B. FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNABS, CNTXT, VCN, VEN, USTXT, CNKI, ISI: 折叠, 屏, 显示, 阈值, 展开, 水平面, 夹角, 折叠边, 应用, 界面, fold, screen, display, threshold, unfold, horizontal, plane, angle, edge, application, interface

**C. DOCUMENTS CONSIDERED TO BE RELEVANT**

| Category* | Citation of document, with indication, where appropriate, of the relevant passages | Relevant to claim No. |
| --- | --- | --- |
| Y | WO 2021104008 A1 (HUAWEI TECHNOLOGIES CO., LTD.) 03 June 2021 (2021-06-03) description, page 7, line 1-page 27, line 10, and figures 3-14B | 1-17 |
| Y | CN 112905096 A (BEIJING XIAOMI MOBILE SOFTWARE CO., LTD.) 04 June 2021 (2021-06-04) description, paragraphs [0078]-[0155], and figures 1-4 | 1-17 |
| A | CN 107608452 A (ZHUHAI GREE ELECTRIC APPLIANCES INC.) 19 January 2018 (2018-01-19) entire document | 1-17 |
| A | CN 110620833 A (HUAWEI TECHNOLOGIES CO., LTD.) 27 December 2019 (2019-12-27) entire document | 1-17 |
| A | CN 111475077 A (HUAWEI TECHNOLOGIES CO., LTD.) 31 July 2020 (2020-07-31) entire document | 1-17 |

☐ Further documents are listed in the continuation of Box C.   ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **06 February 2023** | **10 February 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2022/136542**

| Patent document cited in search report | | | Publication date (day/month/year) | Patent family member(s) | | | Publication date (day/month/year) |
|---|---|---|---|---|---|---|---|
| WO | 2021104008 | A1 | 03 June 2021 | EP | 4057136 | A1 | 14 September 2022 |
| CN | 112905096 | A | 04 June 2021 | None | | | |
| CN | 107608452 | A | 19 January 2018 | None | | | |
| CN | 110620833 | A | 27 December 2019 | JP | 2022544610 | A | 19 October 2022 |
| | | | | US | 2022335406 | A1 | 20 October 2022 |
| | | | | WO | 2021031849 | A1 | 25 February 2021 |
| | | | | EP | 3996358 | A1 | 11 May 2022 |
| CN | 111475077 | A | 31 July 2020 | WO | 2021155808 | A1 | 12 August 2021 |

Form PCT/ISA/210 (patent family ai

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111510479X